# EUROPEAN PATENT SPECIFICATION

(11) **EP 4 603 202 B1**
(45) Date of publication and mention of the grant of the patent: **11.11.2026**
(21) Application number: 23877144.8
(22) Date of filing: 26.09.2023
(51) Int. Cl.: B21D 5/02, B21D 43/00, B21D 55/00, G05B 19/4061

(54) **ABUTMENT MECHANISM OPERATION CONTROL METHOD, ABUTMENT MECHANISM OPERATION CONTROL PROGRAM, AND ABUTMENT MECHANISM OPERATION CONTROL DEVICE**
ANSCHLAGMECHANISMUS-BETRIEBSSTEUERVERFAHREN, ANSCHLAGMECHANISMUS-BETRIEBSSTEUERPROGRAMM UND ANSCHLAGMECHANISMUS-BETRIEBSSTEUERVORRICHTUNG
PROCÉDÉ DE COMMANDE DE FONCTIONNEMENT DE MÉCANISME DE BUTÉE, PROGRAMME DE COMMANDE DE FONCTIONNEMENT DE MÉCANISME DE BUTÉE ET DISPOSITIF DE COMMANDE DE FONCTIONNEMENT DE MÉCANISME DE BUTÉE

(30) Priority: 13.10.2022 JP 2022164966
(43) Date of publication of application: 20.08.2025
(73) Proprietor: Amada Co., Ltd., Isehara-shi, Kanagawa 259-1196 (JP)
(72) Inventor: NISHIYAMA, Ryuki, Isehara-shi, Kanagawa 259-1196 (JP)
(74) Representative: Grünecker Patent- und Rechtsanwälte PartG mbB
(86) International application number: PCT/JP2023/034973
(87) International publication number: WO 2024/080138

(56) References cited:
- JP-A- 2001 150 071
- JP-A- 2002 018 525
- JP-A- H10 211 523
- JP-B2- 2 907 346
- JP-B2- 3 181 413
- JP-B2- 6 557 128
- JP-B2- 7 121 723
- JP-U- H 069 715
- JP-U- H0 553 723

## Description

### Technical Field

The present invention relates to an abutment mechanism operation control method, an abutment mechanism operation control program, and an abutment mechanism operation control device.

### Background Art

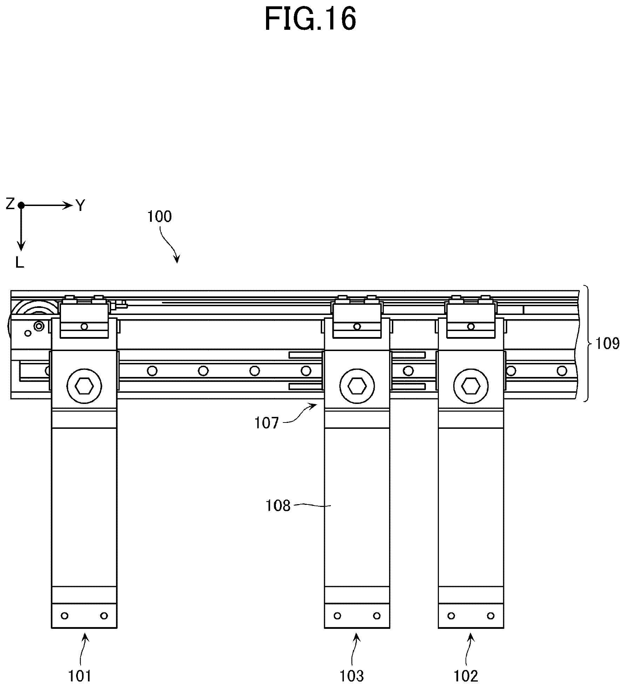

Conventionally, a bending process device (press brake) is known that includes a stopper unit (back gauge device) abutting a workpiece end on the rear of a lower table (press table) at the time of a bending process of the workpiece. For example, Patent Literature 1 describes that a stopper unit 100, which is aligned in parallel with the long direction of a press table (not illustrated) of a press brake, includes first, second, and third stoppers (abutment mechanisms) 101, 102, 103 arranged above a guide beam 109, such as shown in Figure 16.

The stopper unit 100 described in Patent Literature 1 is configured, for example, so that the position of the third stopper 103, which is arranged between the first stopper 101 and the second stopper 102, can be positioned by adjusting the position of the first stopper 101 or the second stopper 102 along the guide beam 109.

Accordingly, for example, even in the case where carrying out a bending process of a workpiece with a long width dimension (long object), since the bending process can be performed by abutting the end portion of the workpiece on the first to third stoppers, there is an advantageous point in which a deterioration in bending accuracy, due to a bias occurring in bending at the end portion of the workpiece, can be prevented.

### Citation List

### Patent Literature

Patent Literature 1: International Publication No. 2022/067363
Patent Literature 2: JP H06 9715 U

### Summary

Incidentally, in the stopper unit 100 described in Patent Literature 1, both a stopper finger (abutment part) 108 and a carriage (base part) 107 of each of the first to third stoppers 101 to 103 has a strip-type straight shape, when seen in an upper surface view, such as shown in Figure 16. Accordingly, in the case where the first to third stoppers 101 to 103 are moved in a front-rear direction (arrow L direction within the figure), a horizontal direction (arrow Y direction within the figure), and an up-down direction (Z direction within the figure) of the stopper unit 100, and the positions thereof are adjusted, the respective operations will not interfere with each other.

On the other hand, in order to attempt contact and support to the end portion of a more versatile workpiece, it can be considered to set as a shape where the stopper finger 108 in each of the first and second stoppers 101, 102 on both sides is arranged offset from the carriage 107 to be brought close to the stopper finger 108 of the third stopper 103, for example, by making the entire width in the horizontal direction of the stopper finger 108 of each of the first to third stoppers 101 to 103 thin.

However, in a stopper unit including such a plurality of stoppers of special shapes, there is a problem in which there is the possibility of the first to third stoppers 101 to 103 interfering with each other during operation of the stopper unit, depending on a combination of the positions before and after operation in the front-rear direction and the horizontal direction, and operation content by an operation pattern, between the first and second stoppers 101, 102 and the third stopper 102.

Patent Literature 2 discloses a further device with several abutment mechanisms moving in two intersecting directions.

An aspect of the present invention is an abutment mechanism operation control method, an abutment mechanism operation control program, and an abutment mechanism operation control device that can prevent interference between abutment mechanisms, in an operation of a plurality of abutment mechanisms including abutment parts of special shapes.

The abutment mechanism operation control method relating to an aspect of the present invention includes determining, when, from among at least three abutment mechanisms each including a base part and an abutment part provided on a tip end side of the base part, each configured to be movable along each of a first operation axis in a first direction and a second operation axis in a second direction intersecting the first direction, and each arranged in parallel in the second direction, first and second abutment mechanisms positioned at both sides in the second direction and each having a shape with the abutment part arranged offset with respect to a reference axis of the base part along the first direction, and a third abutment mechanism positioned between the first and second abutment mechanisms, are operated by an operation control device based on operation control information, whether an operation of at least one of the first and second abutment mechanisms and an operation of the third abutment mechanism interfere with each other, and causing at least one of the first, second, and third abutment mechanisms to perform an avoiding operation to prevent the interference based on a determined determination result, wherein the avoiding operation is an operation to move at least one of the first, second, and third abutment mechanisms along the first operation axis and the second operation axis.

The abutment mechanism operation control program relating to an aspect of the present invention causes an operation control device to execute a determination process configured to determine, when, from among at least three abutment mechanisms each including a base part and an abutment part provided on a tip end side of the base part, each configured to be movable along each of a first operation axis in a first direction and a second operation axis in a second direction intersecting the first direction, and each arranged in parallel in the second direction, first and second abutment mechanisms positioned at both sides in the second direction and each having a shape with the abutment part arranged offset with respect to a reference axis of the base part along the first direction, and a third abutment mechanism positioned between the first and second abutment mechanisms, are operated by an operation control device based on operation control information, whether an operation of at least one of the first and second abutment mechanisms and an operation of the third abutment mechanism interfere with each other, and an avoiding operation process configured to cause at least one of the first, second, and third abutment mechanisms to perform an avoiding operation to prevent the interference based on a determination result determined by the determination process, wherein the avoiding operation is an operation to move at least one of the first, second, and third abutment mechanisms along the first operation axis and the second operation axis.

The abutment mechanism operation control device relating to an aspect of the present invention includes a back gauge device including at least three abutment mechanisms each including a base part and an abutment part provided on a tip end side of the base part, each configured to be movable along each of a first operation axis in a first direction and a second operation axis in a second direction intersecting the first direction, and each arranged in parallel in the second direction, and a control unit configured to control an operation of the back gauge device, the control unit is configured to perform a determination process configured to determine, when, from among the abutment mechanisms of the back gauge device, first and second abutment mechanisms positioned at both sides in the second direction and each having a shape with the abutment part arranged offset with respect to a reference axis of the base part along the first direction, and a third abutment mechanism positioned between the first and second abutment mechanisms, are operated based on operation control information, whether an operation of at least one of the first and second abutment mechanisms and an operation of the third abutment mechanism interfere with each other, and an avoiding operation process configured to cause at least one of the first, second, and third abutment mechanisms to perform an avoiding operation to prevent the interference based on a determination result determined by the determination process, wherein the avoiding operation is an operation to move at least one of the first, second, and third abutment mechanisms along the first operation axis and the second operation axis.

According to the abutment mechanism operation control method, the abutment mechanism operation control program, and the abutment mechanism operation control device relating to an aspect of the present invention, since a determination is performed for whether an operation of at least one of the first and second abutment mechanisms positioned at both sides and each having a shape with an abutment part arranged offset, and an operation of a third abutment mechanism positioned between the first and second abutment mechanisms, interfere with each other, and at least one of the first, second, and third abutment mechanisms is caused to perform an avoiding operation to prevent the interference based on a determination result, interference between the abutment mechanisms can be surely prevented, in an operation of the plurality of abutment mechanisms including abutment parts of special shapes.

According to an aspect of the present invention, interference between abutment mechanisms can be prevented, in an operation of a plurality of abutment mechanisms including abutment parts of special shapes.

### Brief Description of Drawings

[Figure 1] Figure 1 is a schematic diagram showing a back gauge device to which an abutment mechanism operation control method relating to an embodiment of the present invention is applied.
[Figure 2] Figure 2 is a block diagram schematically showing an abutment mechanism operation control device relating to the embodiment.
[Figure 3] Figure 3 is an explanation diagram showing an example of operation patterns of the back gauge device.
[Figure 4] Figure 4 is a flow chart showing an example of an operation control process based on the abutment mechanism operation control method relating to the embodiment.
[Figure 5] Figure 5 is a flow chart showing an example of an interference avoiding operation in the operation control process relating to the embodiment.
[Figure 6] Figure 6 is a flow chart showing an example of an interference avoiding operation in the operation control process relating to the embodiment.
[Figure 7A] Figure 7A is a figure for schematically explaining an operation example 1 of the interference avoiding operation.
[Figure 7B] Figure 7B is a figure for schematically explaining the operation example 1 of the interference avoiding operation.
[Figure 8A] Figure 8A is a figure for schematically explaining an operation example 2 of the interference avoiding operation.
[Figure 8B] Figure 8B is a figure for schematically explaining the operation example 2 of the interference avoiding operation.
[Figure 9A] Figure 9A is a figure for schematically explaining an operation example 3 of the interference avoiding operation.
[Figure 9B] Figure 9B is a figure for schematically explaining the operation example 3 of the interference avoiding operation.
[Figure 10A] Figure 10A is a figure for schematically explaining an operation example 4 of the interference avoiding operation.
[Figure 10B] Figure 10B is a figure for schematically explaining the operation example 4 of the interference avoiding operation.
[Figure 11A] Figure 11A is a figure for schematically explaining an operation example 5 of the interference avoiding operation.
[Figure 11B] Figure 11B is a figure for schematically explaining the operation example 5 of the interference avoiding operation.
[Figure 11C] Figure 11C is a figure for schematically explaining the operation example 5 of the interference avoiding operation.
[Figure 12A] Figure 12A is a figure for schematically explaining an operation example 6 of the interference avoiding operation.
[Figure 12B] Figure 12B is a figure for schematically explaining the operation example 6 of the interference avoiding operation.
[Figure 13A] Figure 13A is a figure for schematically explaining an operation example 7 of the interference avoiding operation.
[Figure 13B] Figure 13BC is a figure for schematically explaining the operation example 7 of the interference avoiding operation.
[Figure 13C] Figure 13C is a figure for schematically explaining the operation example 7 of the interference avoiding operation.
[Figure 14A] Figure 14A is a figure for schematically explaining an operation example 8 of the interference avoiding operation.
[Figure 14B] Figure 14B is a figure for schematically explaining the operation example 8 of the interference avoiding operation.
[Figure 14C] Figure 14C is a figure for schematically explaining the operation example 8 of the interference avoiding operation.
[Figure 15A] Figure 15A is a figure for schematically explaining an operation example 9 of the interference avoiding operation.
[Figure 15B] Figure 15B is a figure for schematically explaining the operation example 9 of the interference avoiding operation.
[Figure 15C] Figure 15C is a figure for schematically explaining the operation example 9 of the interference avoiding operation.
[Figure 16] Figure 16 is a schematic diagram for explaining a configuration of a conventional stopper unit (back gauge device).

### Description of Embodiment

Hereinafter, an abutment mechanism operation control method, an abutment mechanism operation control program, and an abutment mechanism operation control device relating to an embodiment of the present invention will be described in detail, by referring to the attached figures.

In the following embodiment, the same reference numerals are attached to same or corresponding constituent elements, and overlapping explanations will be omitted. Moreover, in the embodiment, the arrangement, scale, dimensions and the like of each constituent element are exaggerated or minimized, there may be cases in which shown in a state where not matching that actually existing, and there may be cases in which a description for constituent elements of one part is shown omitted.

### [Overall configuration of a back gauge device including abutment mechanisms]

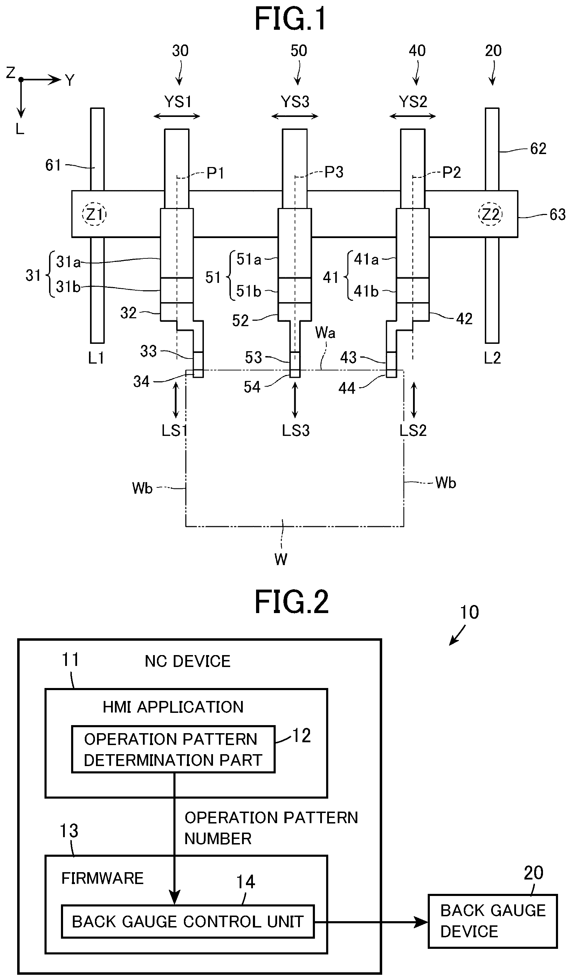

Figure 1 is a schematic diagram showing a back gauge device to which an abutment mechanism operation control method relating to the embodiment of the present invention is applied. Figure 2 is a block diagram schematically showing an abutment mechanism operation control device relating to the embodiment.

As shown in Figure 1, a back gauge device 20 relating to the embodiment is schematically configured to enable the position in an up-down direction (Z direction), a front-rear direction (L direction), and a horizontal direction (Y direction) of a workpiece W abutting the back gauge device 20 to be positioned. As shown in Figure 2, the back gauge device 20 can be controlled by a Numerical Control (NC) device (operation control device) 10, which is a control device of a press brake.

Note that, since the basic configuration and structure of both the back gauge device 20 and the NC device 10 are known, only an outline will be described. Moreover, in the following description, the "L direction" arrow within the figures means, for example, a front-rear direction of the back gauge device 20 in Figure 1, the "Y direction" arrow within the figures means a horizontal direction of the back gauge device 20, and the "Z direction" within the drawings means an up-down direction of the back gauge device 20.

The abutment mechanism operation control method implemented by the NC device 10 includes determining, when, from among at least three abutment mechanisms 30, 40, 50 each including a base part 31, 41, 51 and an abutment part 32, 42, 52 provided on a tip end side of each base part, each configured to be movable along each of a first operation axis (LS1 axis, LS2 axis, LS3 axis) in the L direction (first direction) and a second operation axis (YS1 axis, YS2 axis, YS3 axis) in the Y direction (second direction) intersecting the L direction, and each arranged in parallel in the Y direction (second direction), first and second abutment mechanisms 30, 40 positioned at both sides in the Y direction (second direction) and each having a shape with the abutment part 32, 42 arranged offset with respect to a reference axis P1, P2 of the base part 31, 41 along the L direction (first direction), and a third abutment mechanism 50 positioned between the first and second abutment mechanisms 30, 40, are operated by the NC device (operation control device) 10 based on an operation pattern (operation control information), whether an operation of at least one of the first and second abutment mechanisms 30, 40 and an operation of the third abutment mechanism 50 interfere with each other, and causing at least one of the first, second, and third abutment mechanisms 30, 40, 50 to perform an avoiding operation to prevent the interference based on a determined determination result. While the third abutment mechanism 50 has a shape with the abutment part 52 arranged centered, for example, with respect to a reference axis P3 of the base part 51, the present invention is not limited to this.

Note that, hereinafter, there may be cases in which the base parts 31, 41, 51 are described as "base parts 31 to 51". Moreover, there may be cases in which the abutment parts 32, 42, 52 are described as "abutment parts 32 to 52". Moreover, there may be cases in which the abutment mechanisms 30, 40, 50 are described as "abutment mechanisms 30 to 50".

As stated above, the back gauge device 20 operatively controlled by the NC device 10 includes a pair of guide frames 61, 62 extending in the L direction, for example, such as shown in Figure 1. These guide frames 61, 62 constitute 2 axes of an L1 axis and an L2 axis (hereinafter, these will be collectively called the "L axis" unless specifically stated), and are arranged in parallel in the Y direction. Moreover, the back gauge device 20 includes a guide beam 63 that extends in the Y direction. The guide beam 63 constitutes 3 axes of a YS1 axis, a YS2 axis, and a YS3 axis (hereinafter, these will be called the "YS axis" or collectively called the "Y axis" unless specifically stated), which are the second operation axis, and are erected on the guide frames 61, 62.

The guide beam 63 is configured to be movable in the L direction (front-rear direction), along the L axis of the guide frames 61, 62. Moreover, the guide beam 63 and the guide frames 61, 62 are configured to be movable in the Z direction (up-down direction), along two axes of a Z1 axis and a Z2 axis (hereinafter, these will be collectively called the "Z axis" unless specifically stated).

The first abutment mechanism 30 is provided on the left side, and the second abutment mechanism 40 is provided on the right side, in the Y direction, when seen in an upper surface view, for example, on the guide beam 63. Moreover, the third abutment mechanism 50 is provided, between the first and second abutment mechanisms 30, 40 (in the middle in the Y direction), on the guide beam 63.

The first abutment mechanism 30 includes the base part 31 that contains a carriage 31a and a bracket 31b connected to a tip end side of the carriage 31a, and the abutment part 32 that contains an abutment body 33 connected to the most tip end side. The abutment part 32 of the first abutment mechanism 30 is formed in a crank shape that is arranged offset, so as to be biased to the third abutment mechanism 50 from the reference axis P1 of the base part 31 (so that the center is displaced to the right side in the Y direction with respect to the reference axis P1).

The second abutment mechanism 40 includes the base part 41 that contains a carriage 41a and a bracket 41b connected to a tip end side of the carriage 41a, and the abutment part 42 that contains an abutment body 43 connected to the most tip end side. The abutment part 42 of the second abutment mechanism 40 is formed in a crank shape that is arranged offset, so as to be biased to the third abutment mechanism 50 from the reference axis P2 of the base part 41 (so that the center is displaced to the left side in the Y direction with respect to the reference axis P2).

The third abutment mechanism 50 includes the base part 51 that contains a carriage 51a and a bracket 51b connected to a tip end side of the carriage 51a, and the abutment part 52 that contains an abutment body 53 connected to the most tip end side. The abutment part 52 of the third abutment mechanism 50 is arranged centered with respect to the reference axis P3 of the base part 51 (arranged so that the center matches with the reference axis P3), and is formed in a T shape so that the width in the Y direction is smaller than the base part 51. Note that, the shapes of the abutment parts 32 to 52 are not limited to those stated above.

These first to third abutment mechanisms 30 to 50 are configured with special shapes so that, when in a state where each of the base parts 31 to 51 are nearest in the Y direction, the crank shape of each of the abutment parts 32, 42 and the T shape of the abutment part 52 are combined, and the abutment bodies 33, 43, 53 are aligned in the Y direction at the tip end side. In this way, it becomes possible to correspond to an abutment by the back gauge device 20, with respect to a workpiece with a small side surface Wa width on the abutment side (small object workpiece) W.

Note that, each of the abutment bodies 33, 43, 53 is configured so that the tip end side thereof is formed in a vertical cross-sectional L shape when seen in a side surface view (seen from the Y direction), so as to be able to support the side surface Wa on the abutment side of the workpiece W at the end surface on the front side of a stepped portion, and to be able to support a bottom surface of the workpiece W at the surface of a support end part 34.

Also, the first abutment mechanism 30 is configured to be independently movable in the Y direction along the YS1 axis of the second operation axis and in the L direction along the LS1 axis of the first operation axis on the guide beam 63. Similarly, the second abutment mechanism 40 and the third abutment mechanism 50 are each configured to be independently movable in the Y direction along the YS2 axis and the YS3 axis of the second operation axis and in the L direction along the LS2 axis and the LS3 axis of the first operation axis on the guide beam 63.

While the movement in the Y direction along the Y axis of these first to third abutment mechanisms 30 to 50 is performed, for example, by the guide beam 63 and a drive mechanism such as a known rack and pinion mechanism included in each of the carriages 31a, 41a, 51a, and the movement in the L direction along the LS1 axis, the LS2 axis, and the LS3 axis (hereinafter, these will be collectively called the "LS axis" unless specifically stated), which are the first operation axis, is performed by a drive mechanism such as a linear scale included in each of the carriages 31a, 41a, 51a, the present invention is not limited to this.

In this way, each of the abutment mechanisms 30 to 50 is configured to be movable in the L direction and the Y direction, and in the back gauge device 20 where each of the abutment parts 32 to 52 is formed with a special shape, not only is there correspondence to an abutment of the small object workpiece described above, but it is also possible to appropriately correspond to an abutment of a workpiece W of various shapes and sizes. For example, by abutting the abutment part 32, 42 of either of the first and second abutment mechanisms 30, 40 and the abutment part 52 of the third abutment mechanism 50 with respect to a workpiece W with a large side surface Wa width on the abutment side, the side surface Wa on the abutment side of the workpiece W is supported, the side surface of the abutment part 32, 42 of the other of the first and second abutment mechanisms 30, 40 is supported by making contact with a side surface Wb of the workpiece W, and an abutment correspondence such as positioning the abutment position in the L direction and the Y direction of the workpiece W becomes possible.

### [Limitations of the operations of the back gauge device]

Here, limitations of the operations of the back gauge device 20 will be described. As stated above, in the back gauge device 20 relating to the embodiment, the abutment parts 32, 42 of the first and second abutment mechanisms 30, 40 have a special shape (crank shape) arranged offset such as to become complicated in the Y direction toward the abutment part 52 of the third abutment mechanism 50. Accordingly, interference between the abutment parts 32 to 52 may occur in a part of the operation due to an operation pattern.

For example, a minimum interval, such as follows (hereinafter, called a "shiftable Y axis interval") is necessary in an axis interval in the Y direction (hereinafter, called a "Y axis interval") between the YS1 axis, which sets the reference axis P1 of the base part 31 of the first abutment mechanism 30 as a reference, or the YS2 axis, which sets the reference axis P2 of the base part 41 of the second abutment mechanism 40 as a reference, and the YS3 axis, which sets the reference axis P3 of the base part 51 of the third abutment mechanism 50 as a reference.

Namely, when each of the abutment mechanisms 30 to 50 respectively moves along the LS1 axis, the LS2 axis, and the LS3 axis of the first operation axis, or respectively moves along the YS1 axis, the YS2 axis, and the YS3 axis of the second operation axis, from a predetermined position, the Y axis interval of the first and third abutment mechanisms 30, 50 or the second and third abutment mechanisms 40, 50, which are adjacent in the Y direction, must be equal to or more than a movable (shiftable) Y axis interval limit in the L direction or the Y direction, without the abutment parts 32, 52 or the abutment parts 42, 52 interfering with each other, and without the abutment parts 32, 42, which are arranged offset, interfering with the abutment part 53 or the base part 51.

Therefore, in the case where a positional relationship between the first and second abutment mechanisms 30, 40 and the third abutment mechanism 50 is positioned in a state where the Y axis interval between the YS1 axis, which sets the reference axis P1 as a reference (hereinafter, simply called the "YS1 axis"), or the YS2 axis, which sets the reference axis P2 as a reference (hereinafter, simply called the "YS2 axis"), and the YS3 axis, which sets the reference axis P3 as a reference (hereinafter, simply called the "YS3 axis"), is narrower than the shiftable Y axis interval limit, the first or second abutment mechanism 30, 40 is limited since an operation for moving further to the rear side than the position of the LS3 axis of the third abutment mechanism 50 causes interference by the operation of the LS1 axis or the LS2 axis (Limitation 1). Moreover, in this case, the third abutment mechanism 50 is limited since an operation for moving further to the front side than the position of the LS1 axis or the LS2 axis of the first or second abutment mechanism 30, 40 causes interference by the operation of the LS3 axis (Limitation 2).

In addition, in the case where a positional relationship between the first and second abutment mechanisms 30, 40 and the third abutment mechanism 50 is positioned so that a boundary position of the base part 31, 41 in the reference axis P1, P2 of the abutment part 32 or the abutment part 42 is further to the rear side in the L direction than a boundary position of the base part 51 in the reference axis P3 of the abutment part 52 (namely, in the case where the YS1 axis or the YS2 axis is further to the rear side than the YS3 axis), the first or second abutment mechanism 30, 40 is limited since an operation for approaching across the shiftable Y axis interval limit (exceeding the Y axis interval limit) causes interference, with respect to the position of the YS3 axis of the third abutment mechanism 50, by the operation of the YS1 axis or the YS2 axis (Limitation 3). Moreover, in this case, the third abutment mechanism 50 is limited since an operation for approaching across the shiftable Y axis interval limit (exceeding the Y axis interval limit) causes interference, with respect to the position of the YS1 axis or the YS2 axis of the first or second abutment mechanism 30, 40, by the operation of the YS3 axis (Limitation 4).

When taking into consideration the LS1 axis to the LS3 axis of the first operation axis by combining the above Limitations 1 to 4, in the case where the LS1 axis or the LS2 axis positioned on the outside in the Y direction is positioned by moving further to the rear side in the L direction than the LS3 axis positioned therebetween in the Y direction, and in the case where the LS3 axis positioned therebetween in the Y direction is positioned by moving further to the front side in the L direction than the LS1 axis or the LS2 axis positioned on the outside in the Y direction, it becomes necessary for the Y axis interval between the first or second abutment mechanism 30, 40 and the third abutment mechanism 50 to be equal to or more than the shiftable Y axis interval limit, and in cases other than these, there is no limitation to the movements of the first to third abutment mechanisms 30 to 50.

Therefore, in the operation control method relating to the embodiment, it is configured to determine whether an operation of at least one of the first and second abutment mechanisms 30, 40 and an operation of the third abutment mechanism 50 interfere with each other, in accordance with an operation pattern, and to cause at least one of the first to third abutment mechanisms 30 to 50 to perform an operation (interference avoiding operation) to prevent the interference, in accordance with a determination result. In this way, in the operations of the first to third abutment mechanisms 30 to 50, which include abutment parts 32 to 52 of special shapes (crank shape and T shape), it becomes possible to operate so as to surely prevent interference between each of the abutment mechanisms 30 to 50.

Note that, in the case where taking into consideration only two adjacent axes, from among the LS1 axis to the LS3 axis of the first operation axes of the first to third abutment mechanisms 30 to 50, the interference avoiding operation can be performed based on the presence or absence of an operation axis corresponding to the following Case 1 and Case 2. Here, while a description is performed by providing, as an example, the LS1 axis and the LS3 axis of the first and third abutment mechanisms 30, 50 as two adjacent axes, since the case where replacing the LS1 axis with the LS2 axis of the second abutment mechanism 40 is the same, an explanation will be omitted here for the LS2 axis.

First, Case 1 will be described. In Case 1, a state prior to movement is set as a state where a present position of the LS1 axis is at a same position as, or at a position further to the front than, a present position of the LS3 axis in the L direction (LS1 axis <= LS3 axis), and the Y axis interval between a present position of the YS1 axis and a present position of the YS3 axis is narrower than the shiftable Y axis interval limit (interval between YS1 axis and YS3 axis < Y axis interval limit).

Moreover, a state after movement is set as a state where a target position of the LS1 axis is at a position further to the rear than a target position of the LS3 axis in the L direction (LS1 axis > LS3 axis), and the Y axis interval between a target position of the YS1 axis and a target position of the YS3 axis is equal to or more than the shiftable Y axis interval limit (interval between YS1 axis and YS3 axis >= Y axis interval limit).

As an interference reason in this Case 1, in the case where the LS axis and the Y axis move at the same time, or the Y axis moves after the LS axis moves, it can be considered that interference occurs, by having the position of the LS1 axis positioned further to the rear side in the L direction than the position of the LS3 axis, prior to the Y axis interval between the YS1 axis and the YS3 axis becoming equal to or more than the shiftable Y axis interval limit.

Therefore, as an interference avoiding operation, it is conceivable to start movement of the LS axis at the time when the Y axis interval between the YS1 axis and the YS3 axis exceeds the shiftable Y axis interval limit, by first moving the Y axis.

Next, Case 2 will be described. In Case 2, a state prior to movement is set as a state where a present position of the LS1 axis is at a position further to the rear than a present position of the LS3 axis in the L direction (LS1 axis > LS3 axis), and the Y axis interval between a present position of the YS1 axis and a present position of the YS3 axis is equal to or more than the shiftable Y axis interval limit (interval between YS1 axis and YS3 axis >= Y axis interval limit).

Moreover, a state after movement is set as a state where a target position of the LS1 axis is at a same position as, or a position further to the front than, a target position of the LS3 axis in the L direction (LS1 axis <= LS3 axis), and the Y axis interval between a target position of the YS1 axis and a target position of the YS3 axis is narrower than the shiftable Y axis interval limit (interval between YS1 axis and YS3 axis < Y axis interval limit).

As an interference reason in this Case 2, in the case where the LS axis and the Y axis move at the same time, or the LS axis moves after the Y axis moves, it can be considered that interference occurs, by having the Y axis interval between the LS1 axis and the LS3 axis become narrower than the shiftable Y axis interval limit, prior to the position of the LS1 axis positioned at the same position in the L direction as, or further to the front side in the L direction than, the position of the LS3 axis.

Therefore, as an interference avoiding operation, it is conceivable to start movement of the Y axis at the time when the position of the LS1 axis exceeds a position when becoming the same as the position of the LS3 axis in the L direction by comparing the position of the LS1 axis and the position of the LS3 axis, or to move the LS axis and the Y axis to a target position, after the tip end positions of the LS1 axis and the LS3 axis in the L direction (tip end positions of the abutment parts 32, 52) are aligned along the Y direction, by first moving the LS axis.

In this way, in the interference avoiding operation, it is determined whether or not an avoiding operation is necessary, based on the positional relationship between adjacent LS axes. Namely, it is judged whether or not there is an operation axis corresponding to Case 1 or Case 2, from the positional relationship of the present positions of the LS axis and the Y axis and the target positions in an operation process. Also, in the case where there is an operation axis corresponding to either case, the operations in an operation sequence specified by an operation pattern are changed.

For example, in the case where there is an operation axis corresponding to Case 1, it will be necessary to secure a Y axis interval equal to or more than the shiftable Y axis interval limit, by moving the Y axis prior to moving the LS axis to a target position. Moreover, in the case where there is an operation axis corresponding to Case 2, it will be necessary to move the Y axis to a target position after aligning the target position of the corresponding LS axis such as described above. A detailed description of an operation control process that contains such interference avoiding operations will be described below.

### [Overall configuration of an operation control device for operatively controlling the back gauge device]

As shown in Figure 2, the NC device 10, which is an operation control device, includes a back gauge control unit (control unit) 14 configured to control an operation of the back gauge device 20 including at least three abutment mechanisms 30, 40, 50 each including a base part 31, 41, 51 and an abutment part 32, 42, 52 provided on a tip end side of each base part, each configured to be movable along each of a first operation axis LS1, LS2, LS3 in the L direction (first direction) and a second operation axis YS1, YS2, YS3 in the Y direction (second direction) intersecting the L direction, and each arranged in parallel in the Y direction (second direction). The back gauge control unit (control unit) 14 is configured to perform a determination process configured to determine, when, from among the abutment mechanisms 30, 40, 50 of the back gauge device 20, first and second abutment mechanisms 30, 40 positioned at both sides in the Y direction (second direction) and each having a shape with the abutment part 32, 42 arranged offset with respect to a reference axis P1, P2 of the base part 31, 41 along the L direction (first direction), and a third abutment mechanism 50 positioned between the first and second abutment mechanisms 30, 40, are operated based on an operation pattern (operation control information), whether an operation of at least one of the first and second abutment mechanisms 30, 40 and an operation of the third abutment mechanism 50 interfere with each other, and an avoiding operation process configured to cause at least one of the first, second, and third abutment mechanisms 30, 40, 50 to perform an avoiding operation to prevent the interference based on a determination result determined by the determination process.

The NC device 10 includes a known Human Machine Interface (HMI) application 11 and a firmware 13. The HMI application 11 performs, between a user being an operator or the like and a device such as a press brake, in the NC device 10, comprehensive handling of operation instruction information or setting information input by the user, for example, or transmission, reception, and notification of various types of information such as feedback information from the device.

The firmware 13 is software for control that is prewritten and stored in a storage means such as a Read Only memory (ROM) mounted in the NC device 10, and performs general control of the press brake and the back gauge device 20. Note that, information related to an operation pattern for deciding an operation sequence of the back gauge device 20 is stored in the firmware 13.

The HMI application 11 contains an operation pattern determination part 12. Moreover, the firmware 13 contains the back gauge control unit 14. The operation pattern determination part 12, for example, determines operation patterns, which are described below, of the first to third abutment mechanisms 30 to 50 of the back gauge device 20, which operate in accordance with a processing order of bending processes in the press brake. The back gauge control unit 14 reads out an operation sequence corresponding to an operation pattern number, based on an operation pattern number of an operation pattern determined and notified by the operation pattern determination part 12, and executes the operations of the first to third abutment mechanisms 30 to 50 according to the operation sequence of the back gauge device 20.

Note that, it may be configured so as to control the operations of the back gauge device 20, by an information processing device such as a personal computer or a work station, instead of the NC device 10. In this case, an operation control program of the back gauge device 20 may be executed in the information processing device.

The operation control program, for example, is configured to cause an information processing device (operation control device) to execute a determination process configured to determine, when, from among at least three abutment mechanisms 30, 40, 50 each including a base part 31, 41, 51 and an abutment part 32, 42, 52 provided on a tip end side of each base part, each configured to be movable along each of a first operation axis LS1, LS2, LS3 in the L direction (first direction) and a second operation axis YS1, YS2, YS3 in the Y direction (second direction) intersecting the L direction, and each arranged in parallel in the Y direction (second direction), first and second abutment mechanisms 30, 40 positioned at both sides in the Y direction (second direction) and each having a shape with the abutment part 32, 42 arranged offset with respect to a reference axis P1, P2 of the base part 31, 41 along the L direction (first direction), and a third abutment mechanism 50 positioned between the first and second abutment mechanisms 30, 40, are operated by the information processing device (operation control device) based on an operation pattern (operation control information), whether an operation of at least one of the first and second abutment mechanisms 30, 40 and an operation of the third abutment mechanism 50 interfere with each other, an avoiding operation process configured to cause at least one of the first, second, and third abutment mechanisms 30, 40, 50 to perform an avoiding operation to prevent the interference based on a determination result determined by the determination process.

### [Configuration of the operation patterns]

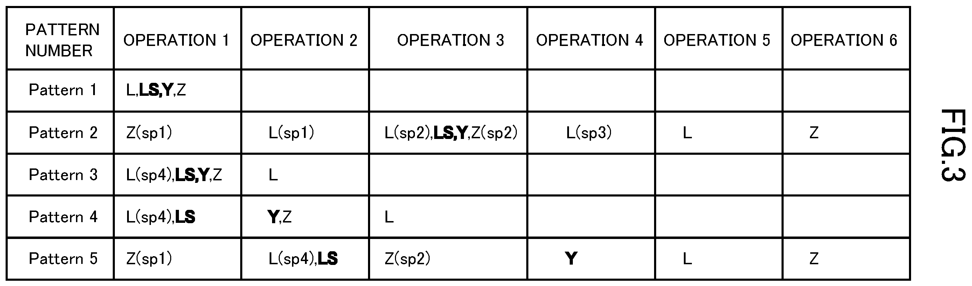

Here, the operation patterns of the back gauge device 20 controlled by the NC device 10 will be described. Figure 3 is an explanation diagram showing an example of operation patterns of the back gauge device.

As shown in Figure 3, the operation patterns used for the operation control of the back gauge device 20 are configured to contain a plurality of operation sequences of Operation 1 to Operation 6 prescribed for each operation pattern number, for example, in order to operate the first to third abutment mechanisms 30 to 50 of the back gauge device 20. Here, while operation pattern numbers 1 to 5 (Patterns 1 to 5) are described as examples, the operation patterns are not limited to these.

Note that, in each of Operations 1 to 6, which are each an operation sequence of an operation pattern, "L" shows an operation of all the L axis bodies of the first to third abutment mechanisms 30 to 50, and "LS" shows an operation of the LS axis of the first to third abutment mechanisms 30 to 50. Moreover, "Y" shows an operation across all the Y axis bodies of the YS axis of the first to third abutment mechanisms 30 to 50, and "Z" shows an operation of the Z axis body of the first to third abutment mechanisms 30 to 50.

Moreover, "L(spn(n is a positive integer))" and "Z(spn(n is a positive integer))" show an operation to temporarily move the L axis and the Z axis to an L axis retreating position and a Z axis retreating position, with an intention to safely operate the respective first to third abutment mechanisms 30 to 50. These retreating positions of the L axis and the Z axis, for example, are notified from the HMI application 11 to the back gauge control unit 14. Note that, the case where a plurality of operations are shown by each of Operations 1 to 6 represents having these performed at the same time.

An operation pattern of an operation pattern number 1 (Pattern 1) is a pattern that performs an operation of "L, LS, Y, Z" in the operation sequence of "Operation 1". This operation pattern, for example, is a pattern that simultaneously performs operations specified by the operation sequence of "Operation 1". Note that, in this operation pattern, operation sequences of "Operation 2" to "Operation 6" are not prescribed. Hereinafter, a description for operation sequences not prescribed will be omitted.

An operation pattern of an operation pattern number 2 (Pattern 2) is a pattern that performs an operation of "Z(sp1)" in the operation sequence of "Operation 1", and performs an operation of "L(sp1)" in the operation sequence of "Operation 2". Moreover, it is a pattern that performs an operation of "L(sp2), LS, Y, Z(sp2)" in the operation sequence of "Operation 3", and performs an operation of "L(sp3)" in the operation sequence of "Operation 4". In addition, it is a pattern that performs an operation of "L" in the operation sequence of "Operation 5", and performs an operation of "Z" in the operation sequence of "Operation 6".

An operation pattern of an operation pattern number 3 (Pattern 3) is a pattern that performs an operation of "L(sp4), LS, Y, Z" in the operation sequence of "Operation 1", and performs an operation of "L" in the operation sequence of "Operation 2".

An operation pattern of an operation pattern number 4 (Pattern 4) is a pattern that performs an operation of "L(sp4), LS" in the operation sequence of "Operation 1", and performs an operation of "Y, Z" in the operation sequence of "Operation 2". Moreover, it is a pattern that performs an operation of "L" in the operation sequence of "Operation 3".

An operation pattern of an operation pattern number 5 (Pattern 5) is a pattern that performs an operation of "Z(sp1)" in the operation sequence of "Operation 1", and performs an operation of "L(sp4), LS" in the operation sequence of "Operation 2". Moreover, it is a pattern that performs an operation of "Z(sp2)" in the operation sequence of "Operation 3", and performs an operation of "Y" in the operation sequence of "Operation 4". In addition, it is a pattern that performs an operation of "L" in the operation sequence of "Operation 5", and performs an operation of "Z" in the operation sequence of "Operation 6".

Note that, in the determination of whether or not the above described avoiding operations are necessary, in the case where an operation axis corresponding to Case 1 or Case 2 is in an operation sequence, an interference avoiding operation is performed, by changing the operations specified by the operation sequences such as described below. For example, in the case where an operation where the LS axis and the Y axis move at the same time is contained in the operations specified by the operation sequence of "Operation N (N is a positive integer), a changed "Operation N' (N is a positive integer)" such as follows is executed.

In the above described operation patterns, an operation where the LS axis and the Y axis move at the same time is contained, for example, in the operation sequences of "Operation 1" of operation pattern numbers 1, 3 (Pattern 1, Pattern 3) and "Operation 3" of operation pattern number 2 (Pattern 2). In these operation sequences, interference is prevented by performing the operations of "Operation N'-(1)", "Operation N'-(2)", and "Operation N'-(3)".

First, "Operation N'-(1)" is an operation that moves the LS axis corresponding to any of the following conditions to an interference avoiding position (retreating position), at the same time as moving the operation axes other than the LS axis and the Y axis to a target position, from among the operation axes moved by "Operation N". Namely, it can be conceived that there are:
Condition 1: an LS axis corresponding to Case 2;
Condition 2: an LS axis where the present position is further to the front side than a target position (process target position) in an operation process (Nth process (N is a positive integer)) of the frontmost (front side in the L direction) LS axis; and
Condition 3: an LS axis where interference newly occurs by moving the LS axis corresponding to any one of Condition 1 and Condition 2 to an interference avoiding position.

Moreover, "Operation N'-(2)" is an operation that moves the Y axis to a target position, in the case where there is an operation axis corresponding to Case 1. Note that, the operation of "Operation N'-(2)" is skipped in the case where there is no corresponding operation axis.

Moreover, "Operation N'-(3)" is an operation that moves the LS axis to a target position, in the case where there is an operation axis corresponding to Case 1, at the time when the Y axis interval between the corresponding operation axis and an adjacent operation axis exceeds the shiftable Y axis interval limit. Note that, in the case where there is no corresponding operation axis, the operation to move the LS axis and the Y axis to a target position is immediately performed.

On the other hand, for example, in the case where an operation where the LS axis moves is contained in the operations specified by the operation sequence of "Operation M (M is a positive integer)", and an operation where the Y axis moves is contained in the operations specified by the operation sequence of "Operation N (N is a positive integer)", a changed "Operation M' (M is a positive integer)" and a changed "Operation N' (N is a positive integer)" such as follows are separately executed.

Namely, in the above described operation patterns, an operation where the LS axis and the Y axis separately move at different times is contained, for example, in "Operation 1" and "Operation 2" of operation pattern number 4 (Pattern 4), and "Operation 2" and "Operation 4" of operation pattern number 5 (Pattern 5). In these operation sequences, interference is prevented by performing the operations of "Operation M'", "Operation N'-(1)", and "Operation N'-(2)".

First, "Operation M'" is an operation that moves the LS axis corresponding to any of the following conditions to an interference avoiding position (retreating position), at the same time as moving the operation axes other than the LS axis to a target position, from among the operation axes moved by "Operation M". Namely, it can be conceived that there are:
Condition 1: an LS axis corresponding to Case 2;
Condition 2: an LS axis where the present position is further to the front side than a target position (process target position) in an operation process (Nth process (N is a positive integer)) of the frontmost (front side in the L direction) LS axis; and
Condition 3: an LS axis where interference newly occurs by moving the LS axis corresponding to any one of Condition 1 and Condition 2 to an interference avoiding position.

Moreover, "Operation N'-(1)" is an operation that moves the operation axes moved in "Operation N" to a target position, in the case where there is an operation axis corresponding to Case 1. Note that, the operation of "Operation N'-(1)" is skipped in the case where there is no corresponding operation axis.

Moreover, "Operation N'-(2)" is an operation that moves the LS axis to a target position, in the case where there is an operation axis corresponding to Case 1, at the time when the Y axis interval between the corresponding operation axis and an adjacent operation axis exceeds the shiftable Y axis interval limit. Note that, in the case where there is no corresponding operation axis, the operation to move the LS axis and the operation axis moved in "Operation N" to a target position is immediately performed.

Here, the interference avoiding position is set as "the most rear (rear side in the L direction) position from among the target positions of the LS axis". In this way, it becomes possible to acquire position information of the operation axes, without newly adding data of position information to operation process data. Note that, if "the most front (front side in the L direction) position from among the target positions of the LS axis" is set as an interference avoiding position, there is the possibility of a tip end of an abutment part being positioned projecting out further to the front side than a target position set beforehand, for example, by an operation that uses the corresponding operation axis as a so-called side gauge.

Moreover, in the case where combining a soft limit and Over-Travel OT of the LS axis, while there is the possibility of operating in a relatively safe manner, even when stretching of an operation axis at some position, there is a high possibility of exerting an influence on the tact by having the movement distance to a target position become longer than necessary. By taking these points into consideration, having a tip end of an abutment part projecting out further to the front than a preset target position is consequently very dangerous in terms of operation since there may be unexpected movements to a worker (user), and the interference avoiding position is therefore decided such as described above.

Moreover, the reason that Condition 2 is set as "an LS axis where the present position is further to the front side than a target position in an operation process of the frontmost LS axis" is due to the following circumstances. Namely, in an operation sequence of an interference avoiding operation, the LS axis may not be operated at a timing when stretching of an operation axis occurs. Accordingly, a condition can be conceived in which the Y axis is operated in a state where a tip end of an abutment part is further to the front than an original position.

In such a condition, the tip end of the abutment part will not escape from an interfering object, and there is the possibility and danger of the abutment part colliding or the like with the interfering object at the time of operation of the Y axis. Therefore, in order to prevent such circumstances, movement (stretchability) to an interference avoiding position is also performed for "an LS axis where the present position is further to the front side than a target position in an operation process of the frontmost LS axis".

Moreover, the point of "an LS axis where interference newly occurs by moving the LS axis to an interference avoiding position" in Condition 3 will be described. First, in the case where the "LS axis" corresponding to Case 2 is set as (A), and "an LS axis where the present position is further to the front side than a target position in an operation process of the frontmost LS axis" is set as (B), when the LS axis corresponding to either of these (A) and (B) is moved to an interference avoiding position, it can be conceived that interference between the operation axes newly occurs, by not moving (not operating) the LS axis adjacent to this operation axis to an interference avoiding position. Therefore, the necessity of moving to an interference avoiding position also occurs for the LS axis corresponding to the following condition.

Namely, at the time when the LS axis (LS1 axis, LS2 axis) on the outer side is moved to an interference avoiding position (at the time when the LS axis on the outer side corresponds to Condition (B)), in the case where the present position of the LS axis on the outer side is further to the front side in the L direction than an interference avoiding position, the present position of the LS3 axis is further to the front side in the L direction than an interference avoiding position, and the Y axis interval at the present position is narrower than the shiftable Y axis interval limit or the Y axis interval at the target position is narrower than the Y axis interval limit, the LS3 axis will be moved at the same time to an interference avoiding position.

Moreover, at the time when the LS3 axis is moved to an interference avoiding position (at the time when the LS3 axis corresponds to Condition (A)), in the case where the present position of the LS axis (LS1 axis, LS2 axis) on the outer side is further to the rear side in the L direction than an interference avoiding position, the present position of the LS3 axis is further to the rear side in the L direction than an interference avoiding position, and the Y axis interval at the present position is narrower than the shiftable Y axis interval limit or the Y axis interval at the target position is narrower than the shiftable Y axis interval limit, the LS axis on the outer side will be moved at the same time to an interference avoiding position.

Namely, in the case where the Y axis interval at the present position is narrower than the shiftable Y axis interval limit, there is a fear that an operation axis will cause interference when the LS axis moves to an interference avoiding position, in the case where the Y axis interval at the target position is narrower than the shiftable Y axis interval limit, there is a fear that interference will occur when the Y axis moves to a target position, and therefore it is necessary to perform these movements at the same time.

Therefore, in the case where it is determined that interference of an operation axis occurs, and as a result, there is interference, an operation control is performed so as to prevent interference between each of the abutment mechanisms 30 to 50 of the back gauge device 20, by performing such an interference avoiding operation. Note that, specific operation examples of an interference avoiding operation will be described below.

### [Operation control process of the back gauge device]

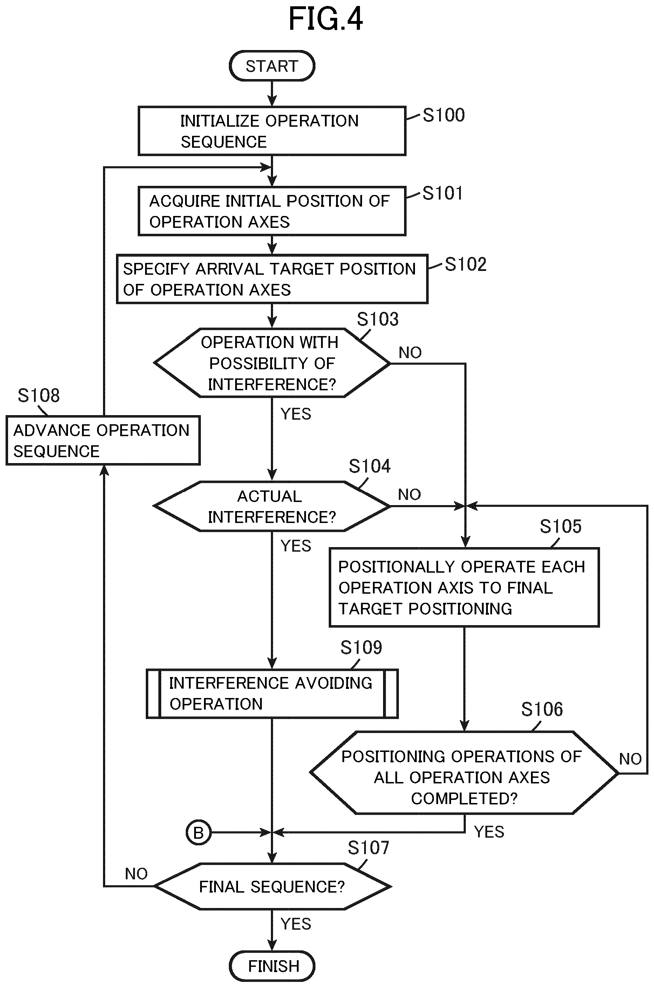

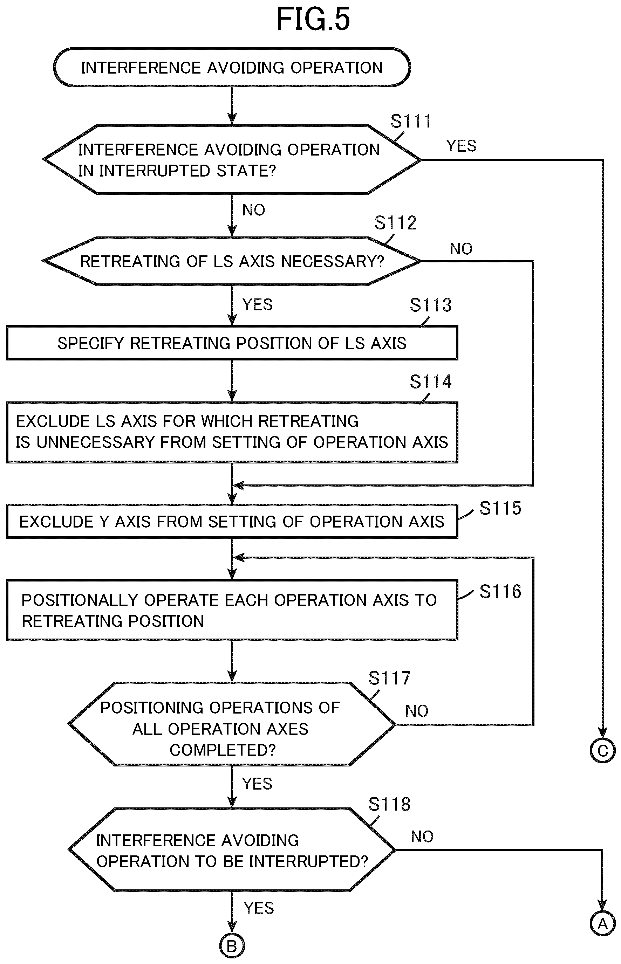

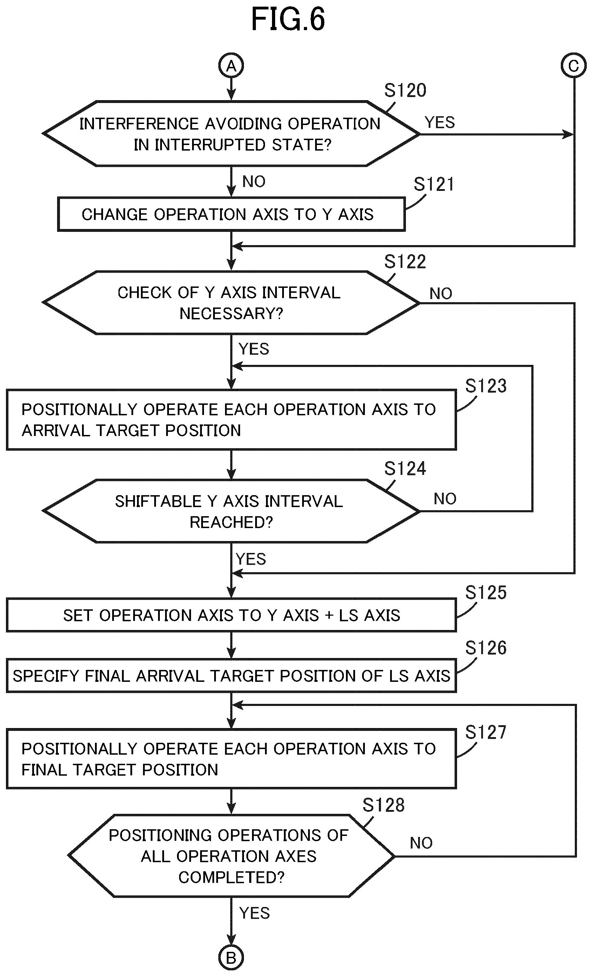

Figure 4 is a flow chart showing an example of an operation control process based on the abutment mechanism operation control method relating to the embodiment. Figure 5 is a flow chart showing an example of an interference avoiding operation in the operation control process relating to the embodiment. Figure 6 is a flow chart showing an example of an interference avoiding operation in the operation control process relating to the embodiment. Note that, in the following flow charts, since the back gauge control unit 14 is mainly the subject of the processes, and the first to third abutment mechanisms 30 to 50 are the object of the processes, a description of these will be omitted unless specifically stated.

As shown in Figure 4, when an operation control process of the first to third abutment mechanisms 30 to 50 is started, first, the back gauge control unit 14 initializes an operation sequence by reading out an operation pattern, in accordance with an operation pattern number notified by the operation pattern determination part 12 (step S100).

Next, an initial position (initial position of the LS axis, initial position of the Y axis) of the operation axes of the first to third abutment mechanisms 30 to 50 specified by the operation sequence of the operation pattern is acquired (step S101). Then, an arrival target position of the operation axes of the first to third abutment mechanisms 30 to 50 is specified (step S102). Note that, this arrival target position in step S102 is decided for each operation sequence.

Next, determining is performed. The determining includes, in operating of the first, second, and third abutment mechanisms 30, 40, 50 prescribed by a specific operation sequence from among a plurality of operation sequences decided by the operation pattern (operation control information), firstly determining whether an operation where the first and second operation axes (LS axis, Y axis) move at the same time or an operation where the first and second operation axes (LS axis, Y axis) move at different times is contained in an operation of at least one of the first and second abutment mechanisms 30, 40 and an operation of the third abutment mechanism 50 as a possibility of interference (step S103), and secondly determining whether the interference occurs based on position information of an initial position (operation start position) and an arrival target position (operation target position) of the first and second operation axes (LS axis, Y axis) for each of the at least one of the first and second abutment mechanisms 30, 40 and the third abutment mechanism 50 in operating in accordance with a firstly determined determination result (step S104).

Namely, in firstly determining of step S103, in the plurality of operation sequences of the operation pattern, a presence or absence of an operation with the possibility of interference is determined, based on whether or not there is an operation where the LS axis and Y axis move at the same time or an operation where the LS axis and Y axis move at different times. In the case where it is determined that there is no operation with the possibility of interference (NO in step S103), each operation axis (LS axis, Y axis) is positionally operated to a final target position, by an operation specified in the operation sequence (step S105), and it is determined whether or not the positioning operations are completed for all operation axes (step S106). For example, in the operation sequence of "Operation 1" of the operation pattern of operation pattern number 2 (Pattern 2), since there is an operation of "Z(sp1)", it is determined that there is no operation with the possibility of interference in step S103.

Then, in the case where it is determined that the positioning operation is completed for all operation axes (YES in step S106), it is determined whether it is a final operation sequence of this operation pattern (step S107), and in the case where it is determined to be a final operation sequence (YES in step S107), the operation control process by the present flow chart is finished.

Moreover, in step S107, in the case where it is determined not to be a final operation sequence (NO in step S107), the operation sequence decided in the operation pattern advances by one (step S108), and the subsequent processes are repeated by moving to step S101. For example, since the operation pattern of operation pattern number 1 (Pattern 1) is only the operation sequence of "Operation 1", it can be determined to be a final sequence in step S107, and in the operation pattern of operation pattern number 2 (Pattern 2), since there are the operation sequences of "Operation 1" to "Operation 6", it cannot be determined to be a final sequence in step S107 until arriving at the operation sequence of "Operation 6", and the operation sequence proceeds from step S108.

On the other hand, in secondly determining of step S104, in the case where it is determined that there is an operation with the possibility of interference in step S103 (YES in step S103), it is determined that there is actually interference, for example, based on a positional relationship between position information of the initial position of the LS axis and the Y axis acquired in step S101 and position information of the arrival target position specified in step S102.

Note that, position information of a table position of a press brake may also be included in this position information of secondly determining. By adding this position information of a table position, it becomes possible to decide on a "danger region", for example, as a region of a predetermined range or the like on the rear side in the L direction from the table position of the press brake. A "danger region" is called a region where it becomes a dangerous state for at least one of the LS axis and Y axis to operate within the region.

Based on these positional relationships, in the case where it is determined that there is actually no interference (NO in step S104), the subsequent processes are repeated by moving to step S105. Moreover, in the case where it is determined that there is actually interference (YES in step S104), an interference avoiding operation (step S109) is executed.

Note that, in avoiding operating, a first avoiding operation along a first operation axis (LS axis) is firstly performed, and thereafter a second avoiding operation along a second operation axis (Y axis) is performed, for at least one of the first, second, and third abutment mechanisms 30, 40, 50. Namely, the subsequent interference avoiding operations are in an order where firstly performing an avoiding operation of the LS axis (first avoiding operation), and thereafter performing an avoiding operation of the Y axis (second avoiding operation). However, the interference avoiding operation is not limited to this.

As shown in Figure 5, in the interference avoiding operation of step S109, first, it is determined whether the interference avoiding operation is in an interrupted state (step S111). This "interrupted state" is called a state where, in the case where the LS axis and Y axis move at different times, an avoiding operation is temporarily stopped and interrupted, for example, at the time when operating the LS axis by any one operation sequence and then operating the Y axis by an operation sequence afterwards, in the case where there is an operation of another operation axis in an operation sequence between these operation sequences.

In the case where it is determined that an interference avoiding operation is not in an interrupted state (NO in step S111), since it is the first avoiding operation, it is determined whether retreating of the LS axis is necessary (step S112). In this step S112, it is determined whether retreating is necessary in accordance with whether an operation of the LS axis is included in the operation sequence.

In the case where it is determined that retreating of the LS axis is necessary (YES in step S112), a target position (retreating position) of the LS axis for which retreating is necessary is specified (step S113), and the LS axis for which retreating is unnecessary is excluded from a setting of the operation axis (step S114). This exclusion of step S114 is performed in order not to operate the LS axis for which retreating is unnecessary, for example, from among the LS1 axis to the LS3 axis.

Then, the Y axis is excluded from a setting of the operation axis (step S115), and each operation axis of the LS axis for which retreating is necessary (in the case where there is one LS axis for which retreating is necessary, this operation axis) is positionally operated to a retreating position, as a first avoiding operation (step S116). The exclusion of step S115 is performed in order not to operate the Y axis in the first avoiding operation. Note that, in the case where it is determined that retreating of the LS axis is unnecessary in step S112 (NO instep S112), an exclusion of the Y axis from an operation axis setting is performed by moving to step S115.

Afterwards, it is determined whether the positioning operations of all operation axes to a retreating position are completed (step S117), and a positioning operation to a retreating position is performed (step S116) until the positioning operations are completed (NO in step S117). In this way, it is determined whether the positioning operations of all operation axes are completed (YES in step S117), and thereafter it is determined whether to interrupt the interference avoiding operation (step S118).

In this determination of step S118, since an operation of "LS, Y" is included, for example, in an operation sequence of "L, LS, Y, Z" of "Operation 1" of the operation pattern of operation pattern number 1 (Pattern 1), it can be determined not to interrupt the interference avoiding operation (NO in step S118).

Moreover, since there is an operation sequence of "Z(sp2)" of Operation 3, for example, between an operation sequence of "L(sp4), LS" of "Operation 2" and an operation sequence of "Y" of "Operation 4", of the operation pattern of operation pattern number 5 (Pattern 5), it can be determined to interrupt the interference avoiding operation (YES in step S118). Namely, in step S118, it is determined not to interrupt in the case where the LS axis and Y axis move at the same time, and to interrupt in the case where the LS axis and Y axis move at different times.

In the case where it is determined to interrupt the interference avoiding operation in step S118 (YES in step S118), it is determined whether it is a final sequence by moving to step S107, and the subsequent processes are repeated. In the case where it is determined not to interrupt the interference avoiding operation in step S118 (NO in step S118), the process moves to the second avoiding operation.

Namely, as shown in Figure 6, first, it is determined whether the interference avoiding operation is in an interrupted state (step S120). In the case where it is determined that the interference avoiding operation is not in an interrupted state (NO in step S120), since it is the second avoiding operation, the Y axis excluded from a setting of the operation axis in step S115 is brought back, and therefore the operation axis is changed to the Y axis (step S121).

Then, it is determined whether a check of the Y axis interval between each operation axis at the present position is necessary (step S122), and in the case where it is determined to be necessary (YES in step S122), each operation axis is positionally operated to an arrival target position, as a second avoiding operation (step S123), and it is determined whether the Y axis interval has reached the shiftable Y axis interval limit (step S124).

Note that, in the case where it is determined that the interference avoiding operation is in an interrupted state in step S111 (YES in step S111), and in the case where it is determined that the interference avoiding operation is in an interrupted state in step S120 (YES in step S120), the necessity of a check of the Y axis interval is determined by moving to step S122.

In the case where it is determined that the Y axis interval has not reached the shiftable Y axis interval limit (NO in step S124), the positioning operation is continued by moving to step S123, and if it is determined that the Y axis interval has reached the shiftable Y axis interval limit (YES in step S124), a setting of operation axes is set to the Y axis and the LS axis (step S125), and a final arrival target position of the LS axis is specified (step S126).

Namely, the second avoiding operation is performed until an interval in the Y direction (second direction), between the reference axis P1, P2 of the base part 31, 41 of the at least one of the first and second abutment mechanisms 30, 40 and the reference axis P3 of the base part 51 of the third abutment mechanism 50, exceeds the Y axis interval limit (predetermined interval).

Then, in the interference avoiding operation (avoiding operating), a third avoiding operation process along the first and second operation axes (LS axis, Y axis) is performed at the time when the interval in the Y direction (second direction) exceeds the Y axis interval limit (predetermined interval) in the second avoiding operation process. Namely, if a final arrival target position of the LS axis is specified in step S126, each operation axis (LS axis, Y axis) is positionally operated to a final target position, as a third avoiding operation (step S127).

Note that, this operation of the Y axis may be continuously performed in step S127 without stopping midway, while starting from step S123 without change. Since this third avoiding operation operates the LS axis and Y axis at the same time, it consequently contains an operation to move diagonally.

After the positioning operation is performed in step S127, it is determined whether the positioning operations are completed for all operation axes (step S128), and a positioning operation to a final target position is performed (step S127) until the positioning operations are completed (NO in step S128). In this way, if the positioning operations of all operation axes are completed (YES of step S128), it is determined whether it is a final sequence by moving to step S107, and the subsequent processes are repeated.

By performing an operation control process that contains an interference avoiding operation of the back gauge device 20 such as described above, interference between the abutment mechanisms 30 to 50 can be prevented, in an operation of the plurality of abutment mechanisms 30 to 50, which include abutment parts 32, 42, 52 of special shapes (crank shape and T shape).

### [Operation examples of the interference avoiding operation]

Next, operation examples of the interference avoiding operation in the above described operation control processes will be described.

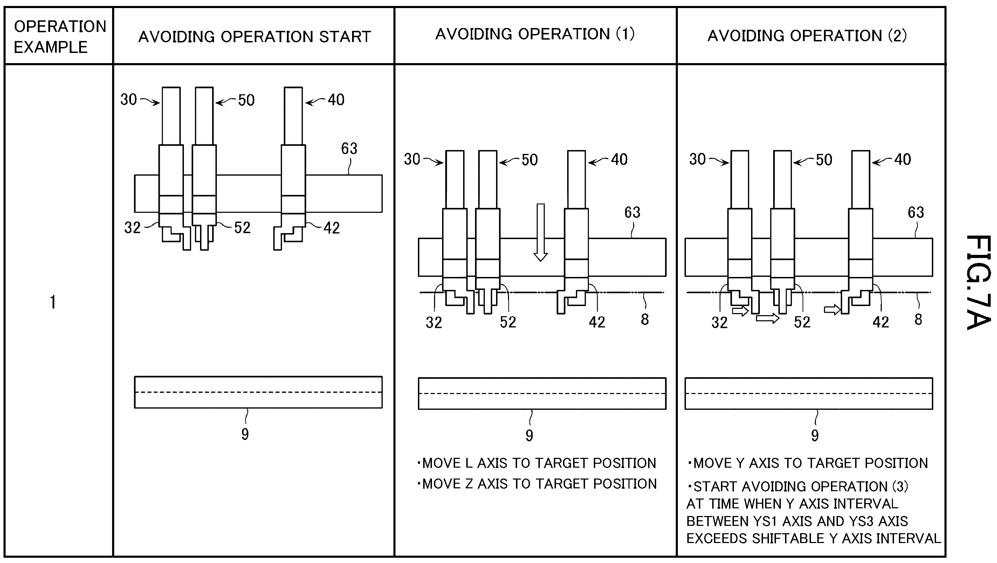

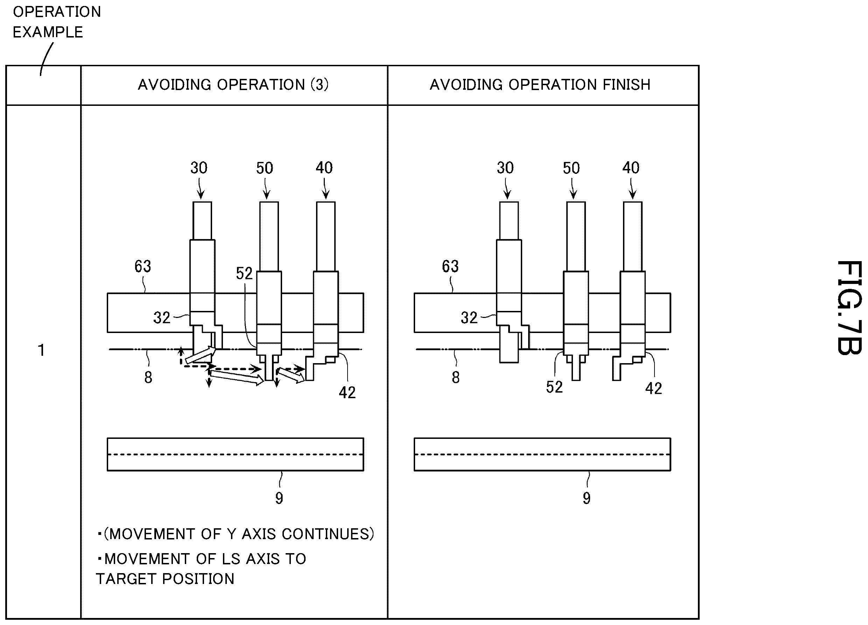

Figure 7A and Figure 7B are figures for schematically explaining an operation example 1 of the interference avoiding operation.

The scenario of the interference avoiding operation of operation example 1 conceives of the case where it is predicted that the LS1 axis of the first abutment mechanism 30 causes interference of Case 1, from the positional relationship of the operation axes, by the operation of "L, LS, Y, Z" in the operation sequence of "Operation 1" of the operation pattern of operation pattern number 1 (Pattern 1). Note that, there is no interference for the LS2 axis of the second abutment mechanism 40. Moreover, the operation sequence of the above described "Operation N" becomes "Operation 1".

As shown in Figure 7A, at the stage of an avoiding operation start, the LS axis (LS1 axis to LS3 axis) and the Y axis (YS1 axis to YS3 axis) of the first to third abutment mechanisms 30 to 50 are positioned in a state where the guide beam 63 is positioned at an initial position sufficiently separated on the rear side in the L direction with respect to the position of the table 9 of the press brake, and interference of Case 1 can occur in the abutment parts 32, 52.

From this state, in avoiding operation (1), the L axis is moved to a target position by moving the guide beam 63 to the front side in the L direction, such as shown by the white arrow within the figure, the Z axis is moved to a target position by moving in the Z direction, and all of the operation axes (LS axis, Y axis) are moved, in an overall manner, to the vicinity of the interference avoiding position line 8 so that the abutment parts 32 to 52 of the first to third abutment mechanisms 30 to 50 pass across the interference avoiding position line 8. This avoiding operation (1), for example, corresponds to the flow of steps of NO in S111, NO in S112, S115, S116, YES in S115, and NO in S118.

Next, in avoiding operation (2), the Y axis (YS1 axis to YS3 axis) of the first to third abutment mechanisms 30 to 50 is moved to a target position (arrival target position) by respectively moving to the right side in the Y direction in the vicinity of the interference avoiding position line 8, such as shown by the white arrow within the figure, and avoiding operation (3) starts at the time when the Y axis interval between the YS1 axis and the YS3 axis exceeds the Y axis interval limit. This avoiding operation (2), for example, corresponds to the flow of steps of NO in S120, YES in S121, S122, and YES in S123, S124.

As shown in Figure 7B, avoiding operation (3) moves the LS axis (LS1 axis to LS3 axis) to a target position (final arrival target position) in the vicinity of the interference avoiding position line 8, while the movement of the Y axis of the first to third abutment mechanisms 30 to 50 continues, such as shown by the dotted line arrows within the figure. In the illustrated example, the first abutment mechanism 30 is moved to the rear side in a right diagonal manner such as shown by the white arrow within the figure, by movement of the Y axis and movement of the LS1 axis to the rear side in the L direction. Moreover, the second and third abutment mechanisms 40, 50 are moved to the front side in a right diagonal manner such as shown by the white arrows within the figure, by movement of the Y axis and movement of the LS2 axis and the LS3 axis to the front side in the L direction. In this way, the first to third abutment mechanisms 30 to 50 are moved diagonally to a final target position without interference by the abutment parts 32 to 52, and the avoiding operation is finished.

At this time, the guide beam 63 is positioned further to the rear side in the L direction than the interference avoiding position line 8. Moreover, the LS1 axis of the first abutment mechanism 30 is positioned at a final target position where the tip end of the abutment part 32 is positioned above the interference avoiding position line 8. In addition, the LS2 axis and the LS3 axis of the second and third abutment mechanisms 40, 50 are positioned at a final target position where the tip ends of the abutment parts 42, 52 are positioned further to the front side in the L direction than the interference avoiding position line 8. This avoiding operation (3), for example, corresponds to the flow of steps of S125 to S128.

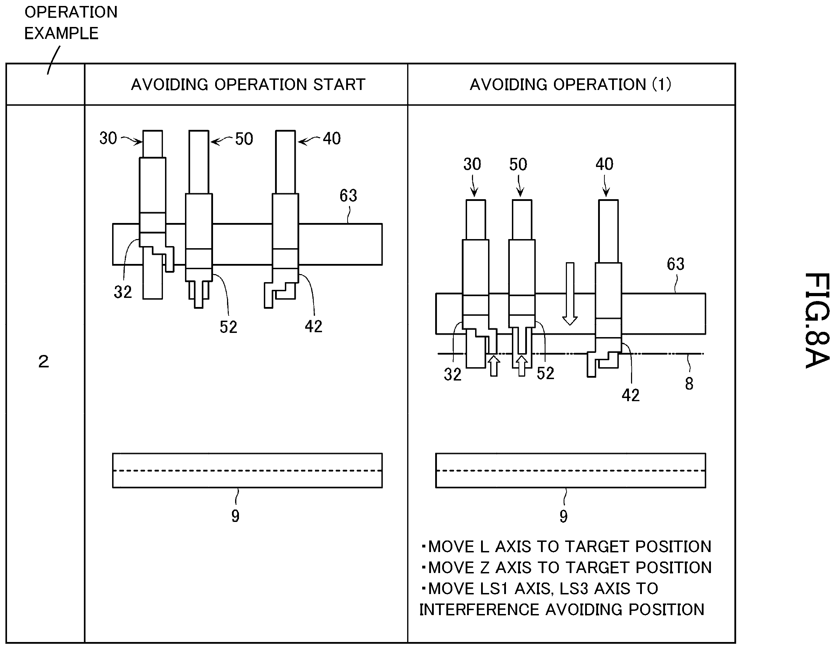

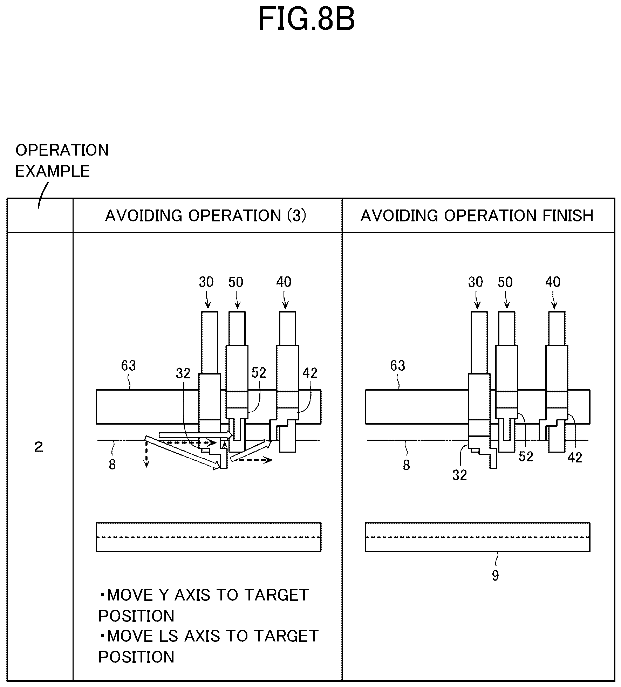

Figure 8A and Figure 8B are figures for schematically explaining an operation example 2 of the interference avoiding operation.

The scenario of the interference avoiding operation of operation example 2 conceives of the case where it is predicted that the LS1 axis of the first abutment mechanism 30 causes interference of Case 2, from the positional relationship of the operation axes, by the operation of "L, LS, Y, Z" in the operation sequence of "Operation 1" of the operation pattern of operation pattern number 1 (Pattern 1). Note that, there is no interference for the LS2 axis of the second abutment mechanism 40. Moreover, the operation sequence of the above described "Operation N" becomes "Operation 1".

As shown in Figure 8A, at the stage of an avoiding operation start, the LS axis (LS1 axis to LS3 axis) and the Y axis (YS1 axis to YS3 axis) of the first to third abutment mechanisms 30 to 50 are positioned in a state where the guide beam 63 is positioned at an initial position sufficiently separated on the rear side in the L direction with respect to the position of the table 9 of the press brake, and interference of Case 2 can occur in the abutment parts 32, 52.

From this state, in avoiding operation (1), the L axis is moved to a target position by moving the guide beam 63 to the front side in the L direction, such as shown by the white arrow within the figure, the Z axis is moved to a target position by moving in the Z direction, and the LS1 axis and the LS3 axis are respectively moved to the rear side in the L direction, such as shown by the white arrows within the figure, up to the interference avoiding position line 8, so that the tip ends of the abutment parts 32, 52 of the first and third abutment mechanisms 30, 50 are above the interference avoiding position line 8. This avoiding operation (1), for example, corresponds to the flow of steps of NO in S111, YES in S112, and YES in S113 to S117.

Next, avoiding operation (2) is skipped since there is no operation axis corresponding to Case 1, and avoiding operation (3) is performed. As shown in Figure 8B, avoiding operation (3) moves the Y axis (YS1 axis, YS2 axis) of the first and second abutment mechanisms 30, 40 to the right side in the Y direction, such as shown by the dotted line arrows within the figure, and moves the LS axis (LS1 axis, LS2 axis) to a target position (final arrival target position) by respectively moving to the front side and the rear side in the L direction. Along with this, the Y axis (YS3 axis) of the third abutment mechanism 50 is moved to a target position (final arrival target position) by moving to the right side in the Y direction, such as shown by the white arrow within the figure.

In the illustrated example, the first abutment mechanism 30 is moved to the front side in a right diagonal manner such as shown by the white arrows within the figure, by movement of the Y axis and movement of the LS1 axis to the front side in the L direction. Moreover, the second abutment mechanism 40 is moved to the rear side in a right diagonal manner such as shown by the white arrows within the figure, by movement of the Y axis and movement of the LS2 axis to the rear side in the L direction. In addition, the third abutment mechanism 50 is moved to the right side in the Y direction, by movement of the Y axis. In this way, the first to third abutment mechanisms 30 to 50 are moved diagonally and in the Y direction to a final target position, without interference by the abutment parts 32 to 52, and the avoiding operation is finished.

At this time, the guide beam 63 is positioned further to the rear side in the L direction than the interference avoiding position line 8. Moreover, the LS1 axis of the first abutment mechanism 30 is positioned at a final target position where the tip end of the abutment part 32 is positioned further to the front side in the L direction than interference avoiding position line 8. In addition, the LS2 axis and the LS3 axis of the second and third abutment mechanisms 40, 50 are positioned at a final target position where the tip ends of the abutment parts 42, 52 are positioned above the interference avoiding position line 8. This avoiding operation (3), for example, corresponds to the flow of steps of YES in S125 to S128.

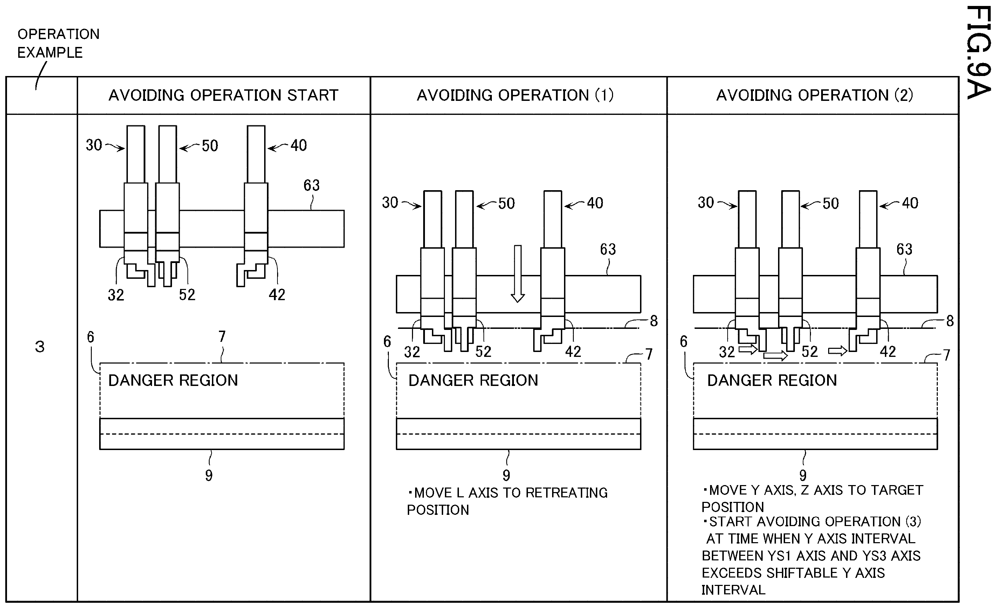

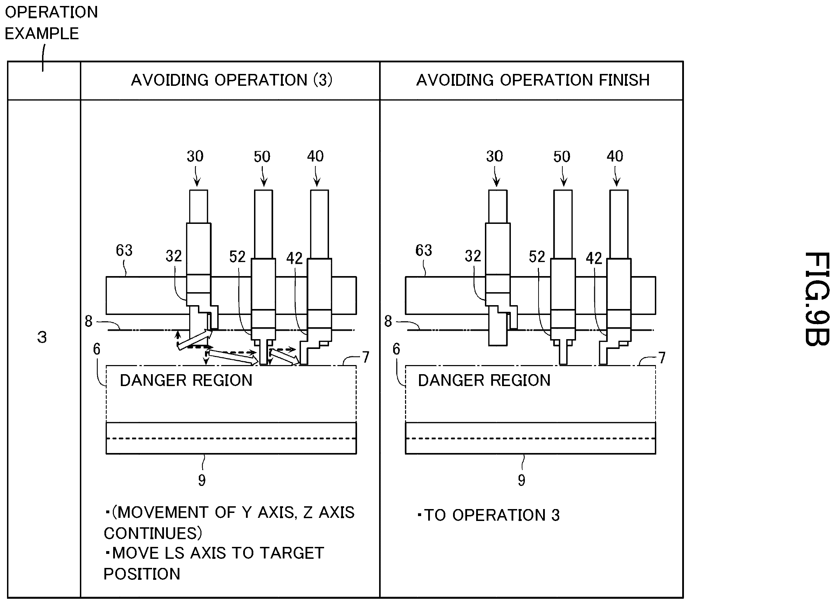

Figure 9A and Figure 9B are figures for schematically explaining an operation example 3 of the interference avoiding operation.

The scenario of the interference avoiding operation of operation example 3 conceives of the case where it is predicted that the LS1 axis of the first abutment mechanism 30 causes interference of Case 1, from the positional relationship of the operation axes, by the operation of "L(sp4), LS" in the operation sequence of "Operation 1", and the operation of "Y, Z" in the operation sequence of "Operation 2", of the operation pattern of operation pattern number 4 (Pattern 4). Note that, there is no interference for the LS2 axis of the second abutment mechanism 40. Moreover, the operation sequence of the above described "Operation M" becomes "Operation 1", and the operation sequence of "Operation N" becomes "Operation 2". Namely, up to avoiding operation (1) becomes "Operation 1", and from avoiding operation (2) becomes "Operation 2".

As shown in Figure 9A, at the stage of an avoiding operation start, the LS axis (LS1 axis to LS3 axis) and the Y axis (YS1 axis to YS3 axis) of the first to third abutment mechanisms 30 to 50 are positioned in a state where the guide beam 63 is positioned at an initial position sufficiently separated on the rear side in the L direction with respect to the position of the table 9 of the press brake and the L axis retreating position line 7 defining the danger region 6 on the rear side in the L direction, and interference of Case 1 can occur in the abutment parts 32, 52.

From this state, in avoiding operation (1), the L axis is moved to the vicinity of the L axis retreating position line 7 that becomes a retreating position by moving the guide beam 63 to the front side in the L direction, such as shown by the white arrow within the figure, the abutment parts 32 to 52 of the first to third abutment mechanisms 30 to 50 pass across the interference avoiding position line 8, and all of the operation axes (LS axis, Y axis) are moved, in an overall manner, to the vicinity of the L axis retreating position line 7 so that the tip ends thereof are positioned in the vicinity to the rear side in the L direction of the L axis retreating position line 7. This avoiding operation (1), for example, corresponds to the flow of steps of NO in S111, NO in S112, and YES in S115 to S117.

Next, in avoiding operation (2), the Y axis (YS1 axis to YS3 axis) of the first to third abutment mechanisms 30 to 50 is moved to a target position (arrival target position) by respectively moving to the right side in the Y direction in the vicinity of the L axis retreating position line 7, such as shown by the white arrow within the figure, the Z axis is moved to a target position by moving the guide beam 63 in the Z direction, and avoiding operation (3) starts at the time when the Y axis interval between the YS1 axis and the YS3 axis exceeds the shiftable Y axis interval limit. This avoiding operation (2), for example, corresponds to the flow of steps of NO in S120, S121, YES in S121, S122, and YES in S123, S124.

As shown in Figure 9B, avoiding operation (3) moves the LS axis (LS1 axis to LS3 axis) to a target position (final arrival target position) in the vicinity of the interference avoiding position line 8, while the movement of the Y axis and the movement of the Z axis of the first to third abutment mechanisms 30 to 50 continues, such as shown by the dotted line arrows within the figure. In the illustrated example, while the arrival position along with movement of the Z axis is omitted, the first abutment mechanism 30 is moved to the rear side in a right diagonal manner such as shown by the white arrow within the figure, when seen in an upper surface view, by movement of the Y axis (and Z axis) and movement of the LS1 axis to the rear side in the L direction. Moreover, the second and third abutment mechanisms 40, 50 are moved to the front side in a right diagonal manner such as shown by the white arrows within the figure, when seen in an upper surface view, by movement of the Y axis (and Z axis) and movement of the LS2 axis and the LS3 axis to the front side in the L direction. In this way, the first to third abutment mechanisms 30 to 50 are moved diagonally to a final target position without interference by the abutment parts 32 to 52, the avoiding operation is finished, and the process moves to the operation of "L" that is the operation sequence of "Operation 3".

At the time of an avoiding operation end, the guide beam 63 is positioned further to the rear side in the L direction than the interference avoiding position line 8. Moreover, the LS1 axis of the first abutment mechanism 30 is positioned at a final target position where the tip end of the abutment part 32 is positioned above the interference avoiding position line 8. In addition, the LS2 axis and the LS3 axis of the second and third abutment mechanisms 40, 50 are positioned at a final target position where the tip ends of the abutment parts 42, 52 are positioned above the L axis retreating position line 7. This avoiding operation (3), for example, corresponds to the flow of steps of YES in S125 to S128, and NO in S107.

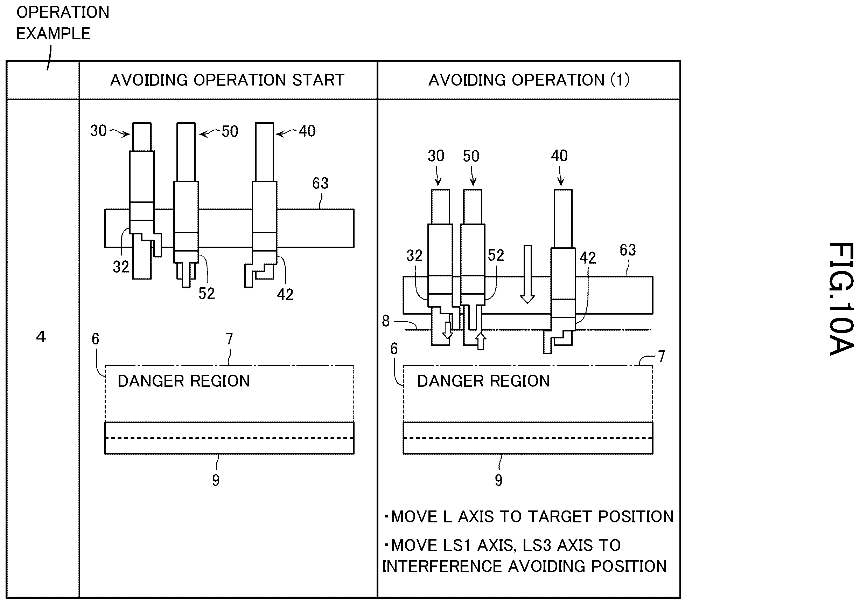

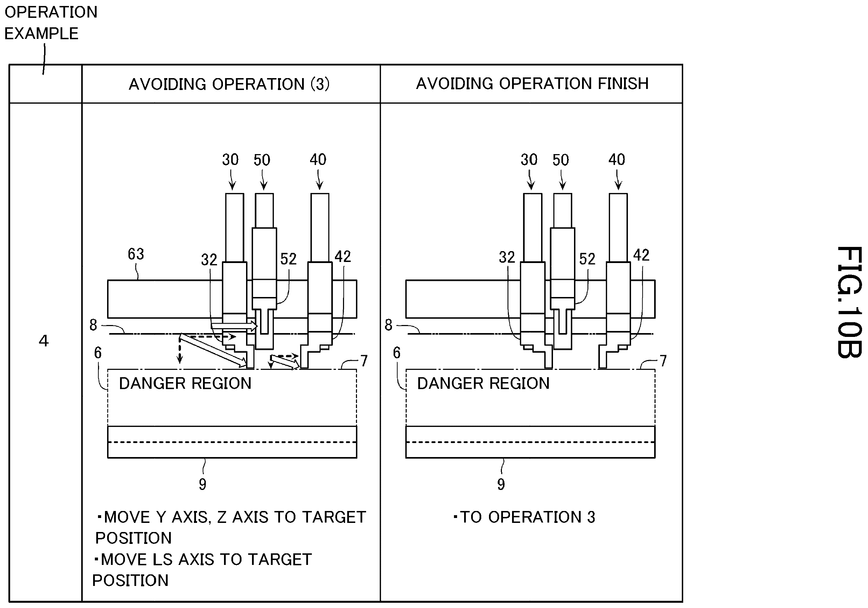

Figure 10A and Figure 10B are figures for schematically explaining an operation example 4 of the interference avoiding operation.

The scenario of the interference avoiding operation of operation example 4 conceives of the case where it is predicted that the LS1 axis of the first abutment mechanism 30 causes interference of Case 2, from the positional relationship of the operation axes, by the operation of "L(sp4), LS" in the operation sequence of "Operation 1", and the operation of "Y, Z" in the operation sequence of "Operation 2", of the operation pattern of operation pattern number 4 (Pattern 4). Note that, there is no interference for the LS2 axis of the second abutment mechanism 40. Moreover, the operation sequence of the above described "Operation M" becomes "Operation 1", and the operation sequence of "Operation N" becomes "Operation 2". Namely, up to avoiding operation (1) becomes "Operation 1", and from avoiding operation (2) becomes "Operation 2".

As shown in Figure 10A, at the stage of an avoiding operation start, the LS axis (LS1 axis to LS3 axis) and the Y axis (YS1 axis to YS3 axis) of the first to third abutment mechanisms 30 to 50 are positioned in a state where the guide beam 63 is positioned at an initial position sufficiently separated on the rear side in the L direction with respect to the position of the table 9 of the press brake and the L axis retreating position line 7 in contact with the danger region 6, and interference of Case 2 can occur in the abutment parts 32, 52.

From this state, in avoiding operation (1), the L axis is moved to the vicinity of the L axis retreating position line 7 that becomes a retreating position by moving the guide beam 63 to the front side in the L direction, such as shown by the white arrow within the figure, and the LS1 axis and the LS3 axis are respectively moved to the front side and the rear side in the L direction, such as shown by the white arrows within the figure, up to the interference avoiding position line 8, so that the tip ends of the abutment parts 32, 52 of the first and third abutment mechanisms 30, 50 are above the interference avoiding position line 8. This avoiding operation (1), for example, corresponds to the flow of steps of NO in S111, and YES in S112, and YES in S113 to S117.

Next, avoiding operation (2) is skipped since there is no operation axis corresponding to Case 1, and avoiding operation (3) is performed. As shown in Figure 10B, avoiding operation (3) moves the Y axis (YS1 axis, YS2 axis) of the first and second abutment mechanisms 30, 40 to the right side in the Y direction, such as shown by the dotted line arrows within the figure, and moves the LS axis (LS1 axis, LS2 axis) to a target position (final arrival target position) by respectively moving to the front side in the L direction. Along with this, the Y axis (YS3 axis) of the third abutment mechanism 50 is moved to a target position (final arrival target position) by moving to the right side in the Y direction, such as shown by the white arrow within the figure.

In the illustrated example, the first and second abutment mechanisms 30, 40 are moved to the front side in a right diagonal manner such as shown by the white arrows within the figure, by movement of the Y axis and movement of the LS1 axis and the LS2 axis to the front side in the L direction. Moreover, the third abutment mechanism 50 is moved to the right side in the Y direction, by movement of the Y axis. In this way, the first to third abutment mechanisms 30 to 50 are moved diagonally and in the Y direction to a final target position, without interference by the abutment parts 32 to 52, the avoiding operation is finished, and the process moves to the operation of "L" that is the operation sequence of "Operation 3".

At the time of an avoiding operation end, the guide beam 63 is positioned further to the rear side in the L direction than the interference avoiding position line 8. Moreover, the LS1 axis and the LS2 axis of the first and second abutment mechanisms 30, 40 are positioned at a final target position where the tip ends of the abutment parts 32, 42 are positioned above the L axis retreating position line 7. In addition, the LS3 axis of the third abutment mechanism 50 is positioned at a final target position where the tip end of the abutment part 52 is positioned above the interference avoiding position line 8. This avoiding operation (3), for example, corresponds to the flow of steps of YES in S125 to S128, and NO in S107.

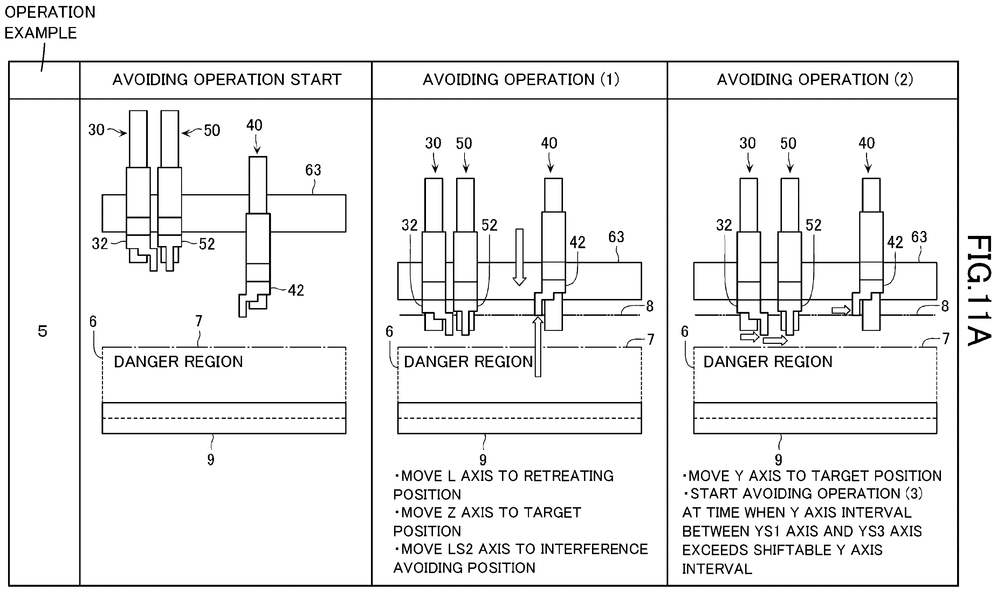

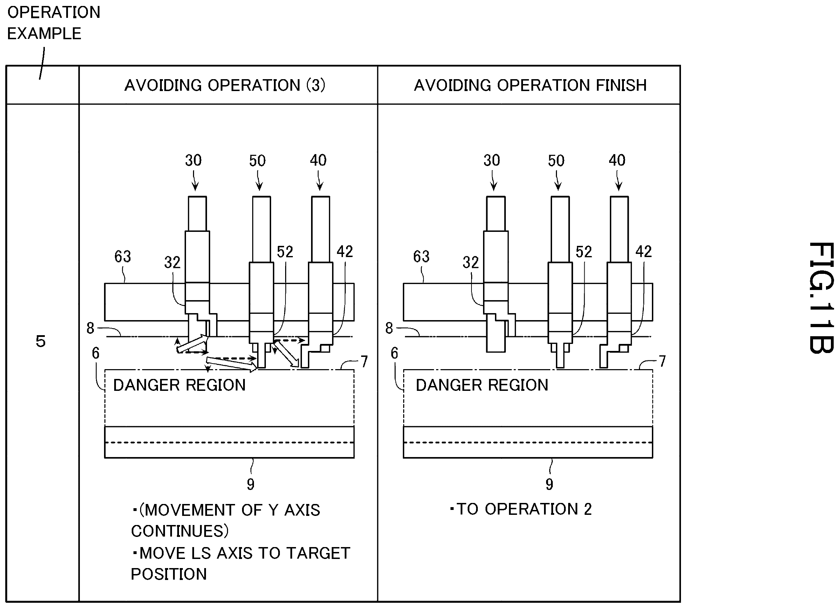

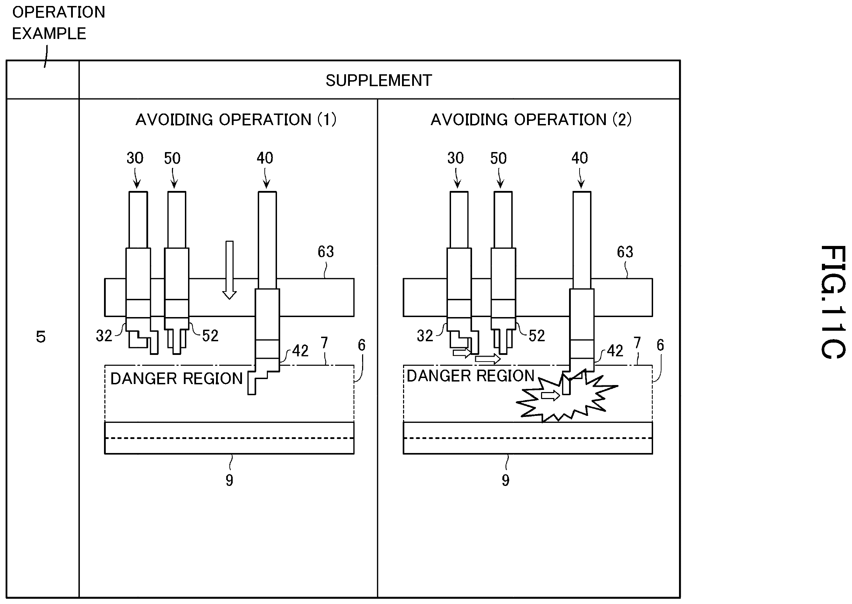

Figure 11A, Figure 11B, and Figure 11C are figures for schematically explaining an operation example 5 of the interference avoiding operation.

The scenario of the interference avoiding operation of operation example 5 conceives of the case where it is predicted that the LS1 axis of the first abutment mechanism 30 causes interference of Case 1 from the positional relationship of the operation axes, by the operation of "L(sp4), LS, Y, Z" in the operation sequence of "Operation 1" of the operation pattern of operation pattern number 3 (Pattern 3). Note that, while there is no interference for the LS2 axis of the second abutment mechanism 40, this corresponds to "an LS axis where the present position is further to the front side than a target position of the frontmost LS axis" of Condition 2 in "Operation N'-(1)". Moreover, the operation sequence of the above described "Operation N" becomes "Operation 1".

As shown in Figure 11A, at the stage of an avoiding operation start, the LS axis (LS1 axis to LS3 axis) and the Y axis (YS1 axis to YS3 axis) of the first to third abutment mechanisms 30 to 50 are positioned at positions where the LS2 axis can become Condition 2, in a state where the guide beam 63 is positioned at an initial position sufficiently separated on the rear side in the L direction with respect to the position of the table 9 of the press brake and the L axis retreating position line 7 in contact with the danger region 6, and interference of Case 1 can occur in the abutment parts 32, 52.

From this state, in avoiding operation (1), the L axis is moved to the vicinity of the L axis retreating position line 7 that becomes a retreating position by moving the guide beam 63 to the front side in the L direction, such as shown by the white arrow within the figure, the Z axis is moved to a target position by moving in the Z direction, the abutment parts 32, 52 of the first and third abutment mechanisms 30, 50 straddle the interference avoiding position line 8, all of the operation axes (LS axis, Y axis) are moved, in an overall manner, to the vicinity of the interference avoiding position line 8 so that the tip end of the abutment part 42 of the second abutment mechanism 40 is above the interference avoiding position line 8, and the LS2 axis is moved to the rear side in the L direction, such as shown by the white arrow within the figure, up to the interference avoiding position line 8. This avoiding operation (1), for example, corresponds to the flow of steps of NO of S111, and YES of S112 to NO of S118.

Next, in avoiding operation (2), the Y axis (YS1 axis to YS3 axis) of the first to third abutment mechanisms 30 to 50 is moved to a target position (arrival target position) by respectively moving to the right side in the Y direction in the vicinity of the interference avoiding position line 8, such as shown by the white arrow within the figure, and avoiding operation (3) starts at the time when the Y axis interval between the YS1 axis and the YS3 axis exceeds the Y axis interval limit. This avoiding operation (2), for example, corresponds to the flow of steps of NO of S120, S121, and YES of S122 to YES of S124.

As shown in Figure 11B, avoiding operation (3) moves the LS axis (LS1 axis to LS3 axis) to a target position (final arrival target position) in the vicinity of the interference avoiding position line 8, while the movement of the Y axis of the first to third abutment mechanisms 30 to 50 continues, such as shown by the dotted line arrows within the figure. In the illustrated example, the first abutment mechanism 30 is moved to the rear side in a right diagonal manner such as shown by the white arrow within the figure, by movement of the Y axis and movement of the LS1 axis to the rear side in the L direction. Moreover, the second and third abutment mechanisms 40, 50 are moved to the front side in a right diagonal manner such as shown by the white arrows within the figure, by movement of the Y axis and movement of the LS2 axis and the LS3 axis to the front side in the L direction. In this way, the first to third abutment mechanisms 30 to 50 are moved diagonally to a final target position without interference by the abutment parts 32 to 52, the avoiding operation is finished, and the process moves to the operation of "L" that is the operation sequence of "Operation 2".

At the time of an avoiding operation end, the guide beam 63 is positioned further to the rear side in the L direction than the interference avoiding position line 8. Moreover, the LS1 axis of the first abutment mechanism 30 is positioned at a final target position where the tip end of the abutment part 32 is positioned above the interference avoiding position line 8. In addition, the LS2 axis and the LS3 axis of the second and third abutment mechanisms 40, 50 are positioned at a final target position where the tip ends of the abutment parts 42, 52 are positioned above the L axis retreating position line 7. This avoiding operation (3), for example, corresponds to the flow of steps of YES of S125 to S128, and NO of S107.

Note that, in avoiding operation (1), the reason that the LS2 axis of the second abutment mechanism 40 is moved so that the tip end of the abutment part 42 of the second abutment mechanism 40 is above the interference avoiding position line 8 is as follows. Namely, as shown in Figure 11C, in the case where the LS2 axis of the second abutment mechanism 40 is not moved in avoiding operation (1), in the following avoiding operation (2), since the YS2 axis is moved in the Y direction such as shown by the white arrow within the figure, in a state where positioned further to the front side in the L direction than the L axis retreating position line 7 (for example, within the danger region 6), by a movement where the tip end of the abutment part 42 of the second abutment mechanism 40 is specified by the original operation sequence, it will be considerably dangerous. In order to prevent this condition, the LS2 axis of the second abutment mechanism 40 is moved to the interference avoiding position line 8 side in avoiding operation (1). This operation corresponds to the avoiding operation referred to in the explanation of Condition 2.

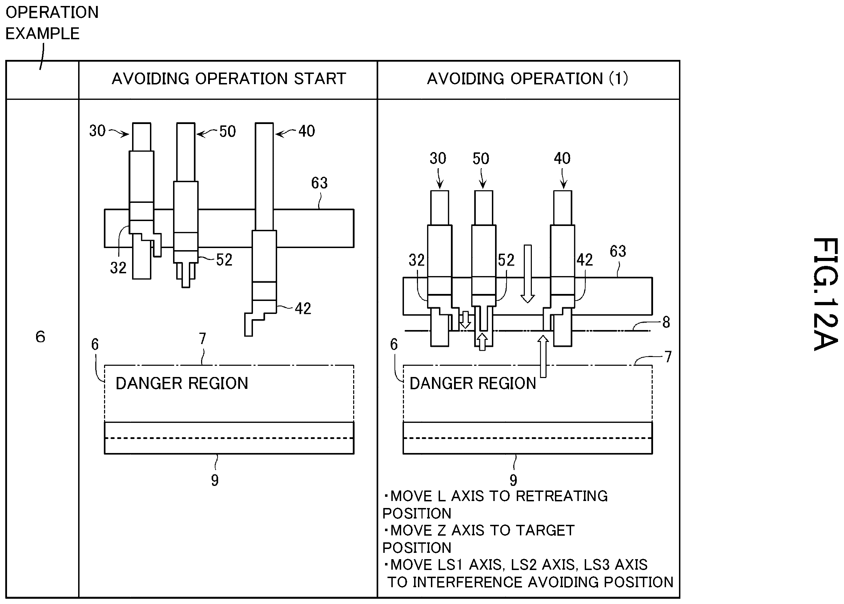

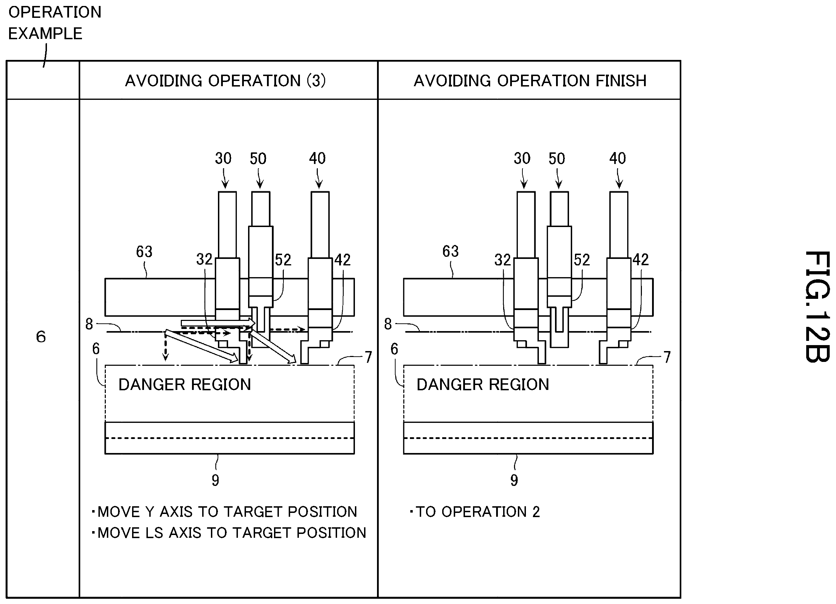

Figure 12A and Figure 12B are figures for schematically explaining an operation example 6 of the interference avoiding operation.

The scenario of the interference avoiding operation of operation example 6 conceives of the case where it is predicted that the LS1 axis of the first abutment mechanism 30 causes interference of Case 2, from the positional relationship of the operation axes, by the operation of "L (sp4, LS, Y, Z)" in the operation sequence of "Operation 1" of the operation pattern of operation pattern number 3 (Pattern 3). Note that, while there is no interference for the LS2 axis of the second abutment mechanism 40, this corresponds to "an LS axis where the present position is further to the front side than a target position of the frontmost LS axis" of Condition 2 in "Operation N'-(1)". Moreover, the operation sequence of the above described "Operation N" becomes "Operation 1".

As shown in Figure 12A, at the stage of an avoiding operation start, the LS axis (LS1 axis to LS3 axis) and the Y axis (YS1 axis to YS3 axis) of the first to third abutment mechanisms 30 to 50 are positioned at positions where the LS2 axis can become Condition 2, in a state where the guide beam 63 is positioned at an initial position sufficiently separated on the rear side in the L direction with respect to the position of the table 9 of the press brake and the L axis retreating position line 7 in contact with the danger region 6, and interference of Case 2 can occur in the abutment parts 32, 52.

From this state, in avoiding operation (1), the L axis is moved to the vicinity of the L axis retreating position line 7 that becomes a retreating position by moving the guide beam 63 to the front side in the L direction, such as shown by the white arrow within the figure, and the Z axis is moved to a target position by moving in the Z direction. Along with this, the LS1 axis and the LS3 axis are respectively moved to the front side and the rear side in the L direction, such as shown by the white arrows within the figure, up to the interference avoiding position line 8, so that the tip ends of the abutment parts 32, 52 of the first and third abutment mechanisms 30, 50 are above the interference avoiding position line 8. Moreover, the LS2 axis is moved to the rear side in the L direction, such as shown by the white arrow within the figure, up to the interference avoiding position line 8, so that the tip end of the abutment part 42 of the second abutment mechanism 40 is above the interference avoiding position line 8. This avoiding operation (1), for example, corresponds to the flow of steps of NO of S111, and YES of S112 to NO of S118.

Next, avoiding operation (2) is skipped since there is no operation axis corresponding to Case 1, and avoiding operation (3) is performed. As shown in Figure 12B, avoiding operation (3) moves the Y axis (YS1 axis, YS2 axis) of the first and second abutment mechanisms 30, 40 to the right side in the Y direction, such as shown by the dotted line arrows within the figure, and moves the LS axis (LS1 axis, LS2 axis) to a target position (final arrival target position) by respectively moving to the front side in the L direction. Along with this, the Y axis (YS3 axis) of the third abutment mechanism 50 is moved to a target position (final arrival target position) by moving to the right side in the Y direction, such as shown by the white arrow within the figure.

In the illustrated example, the first and second abutment mechanisms 30, 40 are moved to the front side in a right diagonal manner such as shown by the white arrows within the figure, by movement of the Y axis and movement of the LS1 axis and the LS2 axis to the front side in the L direction. Moreover, the third abutment mechanism 50 is moved to the right side in the Y direction, by movement of the Y axis. In this way, the first to third abutment mechanisms 30 to 50 are moved diagonally and in the Y direction to a final target position, without interference by the abutment parts 32 to 52, the avoiding operation is finished, and the process moves to the operation of "L" that is the operation sequence of "Operation 2".

At the time of an avoiding operation end, the guide beam 63 is positioned further to the rear side in the L direction than the interference avoiding position line 8. Moreover, the LS1 axis and the LS1 axis of the first and second abutment mechanism 30, 40 are positioned at a final target position where the tip ends of the abutment parts 32, 42 are positioned above the L axis retreating position line 7. In addition, the LS3 axis of the third abutment mechanism 50 is positioned at a final target position where the tip end of the abutment part 52 is positioned above the interference avoiding position line 8. This avoiding operation (3), for example, corresponds to the flow of steps of YES of S125 to S128, and NO of S107. Note that, in avoiding operation (1), since the reason that the LS2 axis of the second abutment mechanism 40 is moved to the interference avoiding position line 8 side is the same as the reason explained in operation example 5, an explanation will be omitted here.

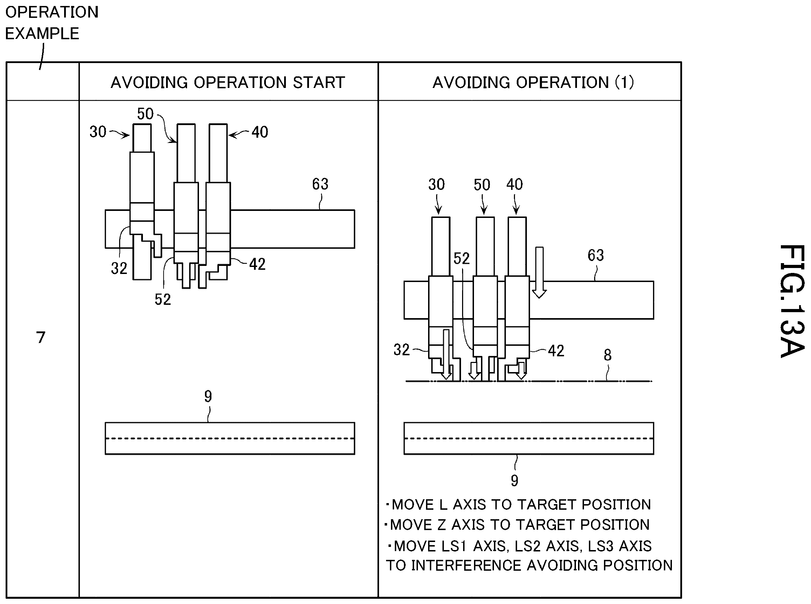

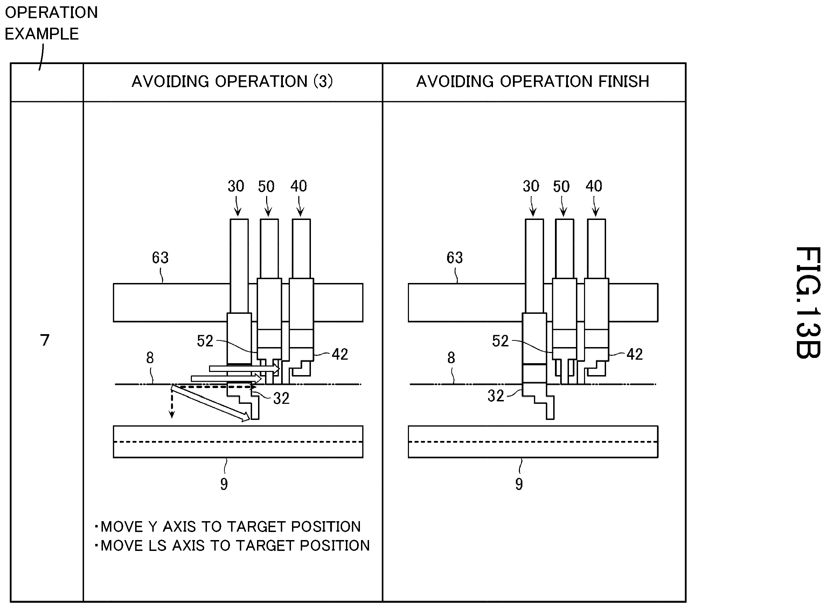

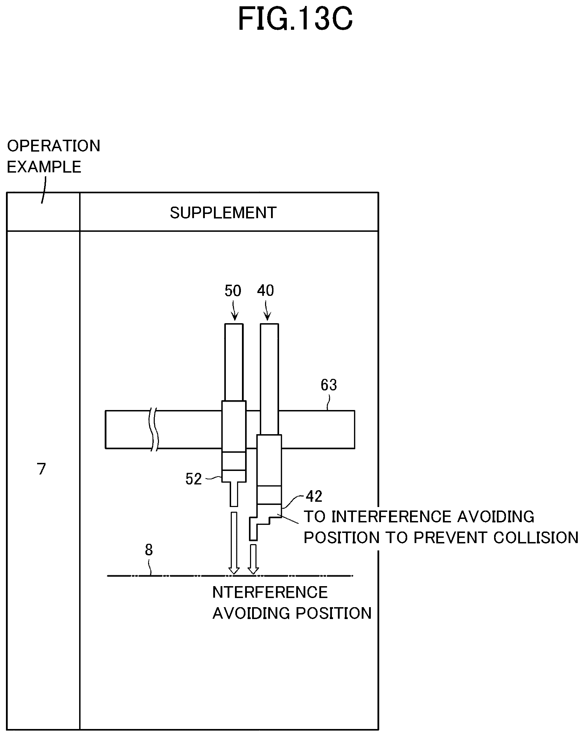

Figure 13A, Figure 13B and Figure 13C are figures for schematically explaining an operation example 7 of the interference avoiding operation.

The scenario of the interference avoiding operation of operation example 7 conceives of the case where it is predicted that the LS1 axis of the first abutment mechanism 30 causes interference of Case 2, from the positional relationship of the operation axes, by the operation of "L LS, Y, Z" in the operation sequence of "Operation 1" of the operation pattern of operation pattern number 1 (Pattern 1). Note that, while there is no interference for the LS2 axis of the second abutment mechanism 40, this corresponds to "an LS axis where interference newly occurs by moving the LS axis to an interference avoiding position" of Condition 3 in "Operation N'-(1)", in the following avoiding operation (1). Moreover, the operation sequence of the above described "Operation N" becomes "Operation 1".

As shown in Figure 13A, at the stage of an avoiding operation start, the LS axis (LS1 axis to LS3 axis) and the Y axis (YS1 axis to YS3 axis) of the first to third abutment mechanisms 30 to 50 are positioned at positions where the LS2 axis can become Condition 3, in a state where the guide beam 63 is positioned at an initial position sufficiently separated on the rear side in the L direction with respect to the position of the table 9 of the press brake, and interference of Case 2 can occur in the abutment parts 32, 52.

From this state, in avoiding operation (1), the L axis is moved to a target position by moving the guide beam 63 to the front side in the L direction, such as shown by the white arrow within the figure, the Z axis is moved to a target position by moving in the Z direction, and the LS1 axis to the LS3 axis are respectively moved to the front side in the L direction, such as shown by the white arrows within the figure, up to the interference avoiding position line 8, so that the tip ends of the abutment parts 32 to 52 of the first to third abutment mechanisms 30 to 50 are above the interference avoiding position line 8. This avoiding operation (1), for example, corresponds to the flow of steps of NO of S111, and YES of S112 to NO of S118.

Next, avoiding operation (2) is skipped since there is no operation axis corresponding to Case 1, and avoiding operation (3) is performed. As shown in Figure 13B, avoiding operation (3) moves the Y axis (YS1 axis) of the first abutment mechanism 30 to the right side in the Y direction, such as shown by the dotted line arrow within the figure, and moves the LS axis (LS1 axis) to a target position (final arrival target position) by moving to the front side in the L direction. Along with this, the Y axis (YS2 axis, YS3 axis) of the second and third abutment mechanisms 40, 50 is moved to a target position (final arrival target position) by moving to the right side in the Y direction, such as shown by the white arrows within the figure. In the illustrated example, the first abutment mechanism 30 is moved to the front side in a right diagonal manner such as shown by the white arrow within the figure, by movement of the Y axis and movement of the LS1 axis to the front side in the L direction. Moreover, the second and third abutment mechanisms 40, 50 are moved to the right side in the Y direction, by movement of the Y axis. In this way, the first to third abutment mechanisms 30 to 50 are moved diagonally and in the Y direction to a final target position, without interference by the abutment parts 32 to 52, and the avoiding operation is finished.

At this time, the guide beam 63 is positioned sufficiently separated on the rear side in the L direction from the interference avoiding position line 8. Moreover, the LS1 axis of the first abutment mechanism 30 is positioned at a final target position where the tip end of the abutment part 32 is positioned at a position nearer the table 9 on the front side in the L direction than the interference avoiding position line 8. In addition, the LS2 axis and the LS3 axis of the second and third abutment mechanisms 40, 50 are positioned at a final target position where the tip ends of the abutment parts 42, 52 are positioned above the interference avoiding position line 8. This avoiding operation (3), for example, corresponds to the flow of steps of YES of S125 to S128.

Note that, in avoiding operation (1), the reason that the LS2 axis of the second abutment mechanism 40 is moved so that the tip end of the abutment part 42 of the second abutment mechanism 40 is above the interference avoiding position line 8 is as follows. Namely, as shown in Figure 13C, when looking at only the positional relationship of the operation axes in the initial position at the time of an avoiding operation start, since interference does not occur at the LS2 axis side, it is not necessary to move the LS2 axis to the interference avoiding position line 8 side. However, in order to prevent interference by Case 2 at the LS1 axis side of the first abutment mechanism 30, the LS1 axis and the LS3 axis are moved to the interference avoiding position line 8 side, and therefore the LS2 axis consequently corresponds to Condition 3, and interference also occurs at the LS2 axis side. In order to prevent this condition, the LS2 axis of the second abutment mechanism 40 is moved to the interference avoiding position line 8 side at the same time as the LS3 axis in avoiding operation (1). This operation corresponds to the avoiding operation referred to in the explanation of Condition 3.

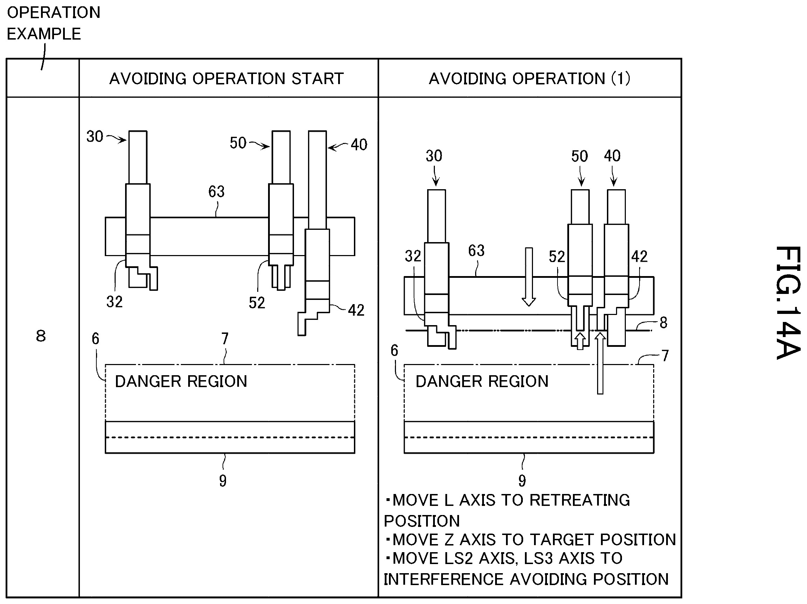

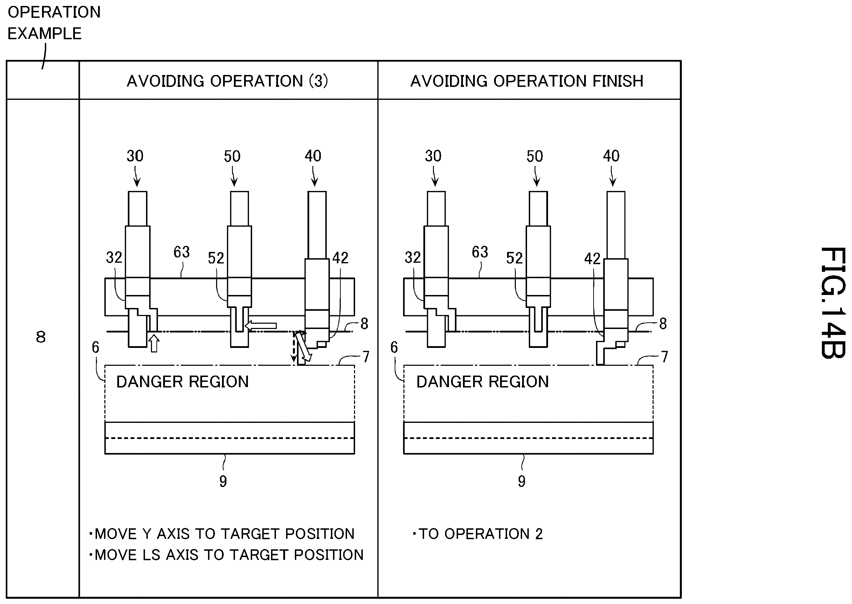

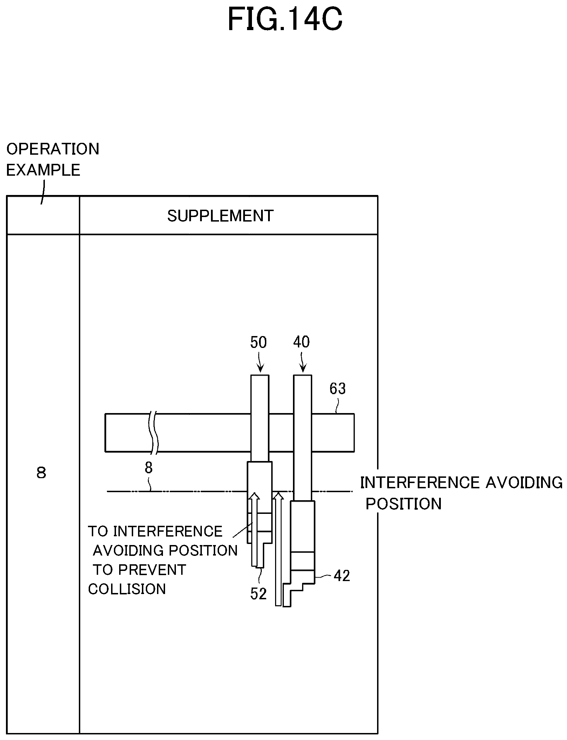

Figure 14A, Figure 14B, and Figure 14C are figures for schematically explaining an operation example 8 of the interference avoiding operation.

The scenario of the interference avoiding operation of operation example 8 does not have interference for the LS1 axis of the first abutment mechanism 30 and the LS2 axis of the second abutment mechanism 40, by the operation of "L(sp4), LS, Y, Z" in the operation sequence of "Operation 1" of the operation pattern of operation pattern number 3 (Pattern 3). However, the LS2 axis of the second abutment mechanism 40 corresponds to "an LS axis where the present position is further to the front side than a target position of the frontmost LS axis" of Condition 2 in "Operation N'-(1)", and this corresponds to "an LS axis where interference newly occurs by moving the LS axis to an interference avoiding position" of Condition 3 in "Operation N'-(1)", in the following avoiding operation (1). Moreover, the operation sequence of the above described "Operation N" becomes "Operation 1".

As shown in Figure 14A, at the stage of an avoiding operation start, the LS axis (LS1 axis to LS3 axis) and the Y axis (YS1 axis to YS3 axis) of the first to third abutment mechanisms 30 to 50 are positioned at positions where the LS2 axis can become Condition 2 and Condition 3, while the guide beam 63 is positioned at an initial position sufficiently separated on the rear side in the L direction with respect to the position of the table 9 of the press brake and the L axis retreating position line 7 in contact with the danger region 6.

From this state, in avoiding operation (1), the L axis is moved to the vicinity of the L axis retreating position line 7 that becomes a retreating position by moving the guide beam 63 to the front side in the L direction, such as shown by the white arrow within the figure, and the Z axis is moved to a target position by moving in the Z direction. Along with this, the LS2 axis and the LS3 axis are respectively moved to the rear side in the L direction, such as shown by the white arrows within the figure, up to the interference avoiding position line 8, so that the tip ends of the abutment parts 42, 52 of the second and third abutment mechanisms 40, 50 are above the interference avoiding position line 8. This avoiding operation (1), for example, corresponds to the flow of steps of NO of S111, and YES of S112 to NO of S118.

Next, avoiding operation (2) is skipped since there is no operation axis corresponding to Case 1, and avoiding operation (3) is performed. As shown in Figure 14B, avoiding operation (3) moves the LS axis (LS1 axis) of the first abutment mechanism 30 to a target position (final arrival target position) by moving to the rear side in the L direction, such as shown by the white arrows within the figure, and moves the Y axis (YS3 axis) of the third abutment mechanism 50 to a target position (final arrival target position) by moving to the left side in the Y direction. Along with this, the Y axis (YS2 axis) of the second abutment mechanism 40 is moved to the right side in the Y direction, and the LS axis (LS2 axis) is moved to a target position (final arrival target position) by moving to the front side in the L direction, such as shown by the dotted line arrow within the figure.

In the illustrated example, the first and third abutment mechanisms 30, 50 are respectively moved to the rear side in the L direction and the left side in the Y direction, so that the tip ends of the abutment parts 32, 52 are above the interference avoiding position line 8, by movement to the rear side in the L direction of the LS1 axis and movement of the Y axis. Moreover, the second abutment mechanism 40 is moved to the front side in a right diagonal manner such as shown by the white arrow within the figure, by movement of the Y axis and movement of the LS2 axis to the front side in the L direction. In this way, the first to third abutment mechanisms 30 to 50 are moved diagonally and in the Y direction to a final target position, without interference by the abutment parts 32 to 52, the avoiding operation is finished, and the process moves to the operation of "L" that is the operation sequence of "Operation 2".

At the time of an avoiding operation end, the guide beam 63 is positioned further to the rear side in the L direction than the interference avoiding position line 8. Moreover, the LS1 axis and the LS3 axis of the first and third abutment mechanism 30, 50 are positioned at a final target position where the tip ends of the abutment parts 32, 52 are positioned above the interference avoiding position line 8. In addition, the LS2 axis of the second abutment mechanism 40 is positioned at a final target position where the tip end of the abutment part 42 is positioned above the L axis retreating position line 7. This avoiding operation (3), for example, corresponds to the flow of steps of YES of S125 to S128, and NO of S107.

Note that, in avoiding operation (1), the reason that the LS3 axis of the third abutment mechanism 50 is moved so that the tip end of the abutment part 52 of the third abutment mechanism 50 is above the interference avoiding position line 8 is as follows. Namely, as shown in Figure 14C, when looking at only the positional relationship of the operation axes in the initial position at the time of an avoiding operation start, since interference does not occur at the LS1 axis side and the LS2 axis side, it is not necessary to move the LS3 axis to the interference avoiding position line 8 side. However, in avoiding operation (1), the LS2 axis is moved to the interference avoiding position line 8 side so as to prevent an operation by becoming the LS axis of Condition 2, by an operation where the tip end of the abutment part 42 of the second abutment mechanism 40 is specified by the original operation sequence, therefore the LS2 axis consequently corresponds to Condition 3, and interference also occurs at the LS2 axis side. In order to prevent this condition, the LS3 axis of the third abutment mechanism 50 is moved to the interference avoiding position line 8 side at the same time as the LS2 axis in avoiding operation (1). This operation corresponds to the avoiding operation referred to in the explanation of Condition 3.

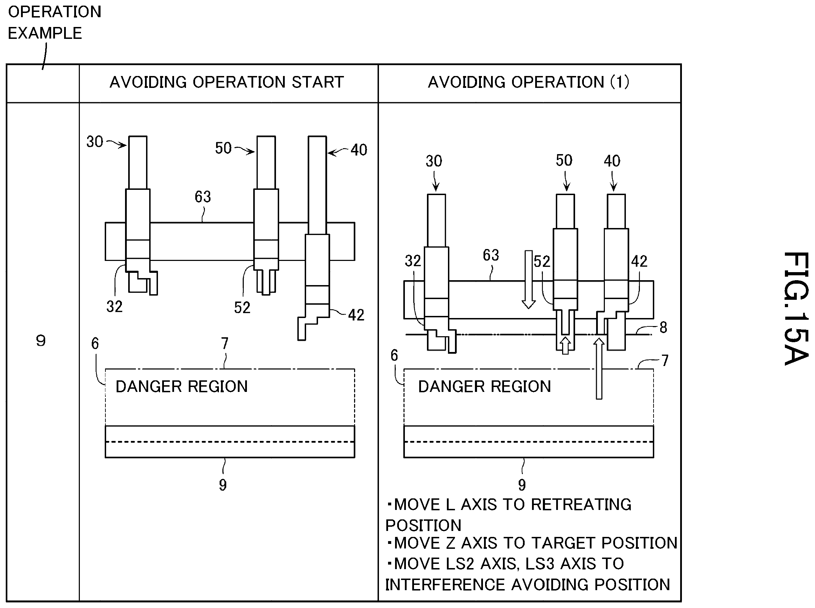

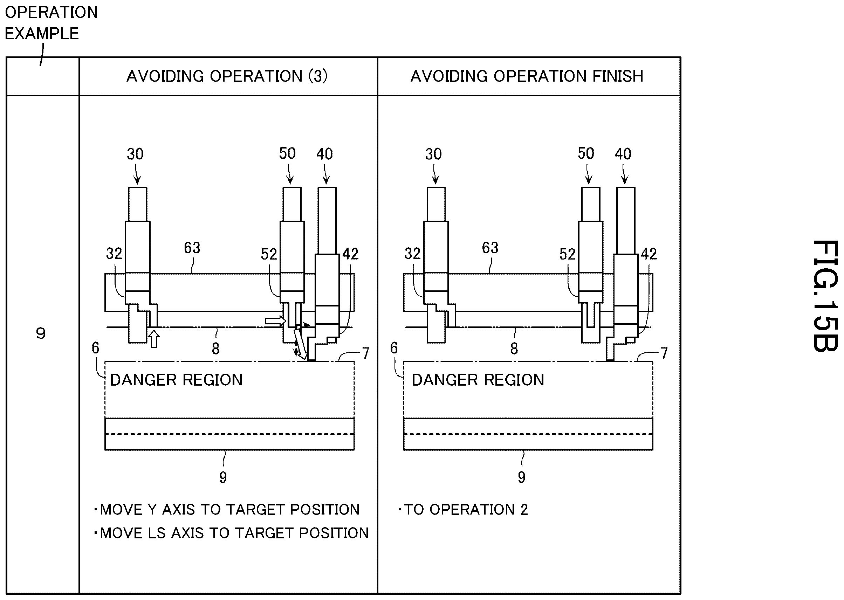

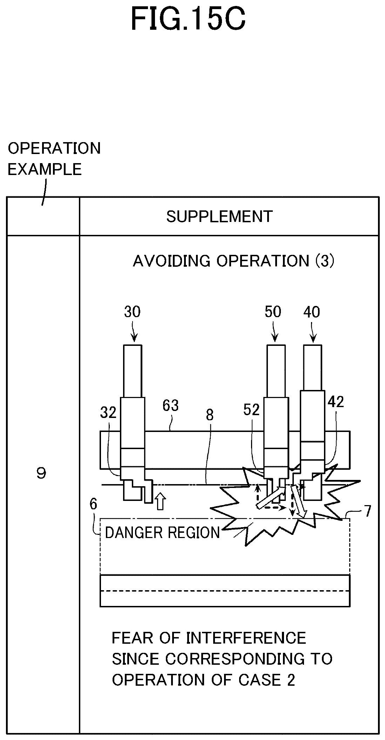

Figure 15A, Figure 15B, and Figure 15C are figures for schematically explaining an operation example 9 of the interference avoiding operation.

The scenario of the interference avoiding operation of operation example 9 does not have interference for the LS1 axis of the first abutment mechanism 30 and the LS2 axis of the second abutment mechanism 40, by the operation of "L(sp4), LS, Y, Z" in the operation sequence of "Operation 1" of the operation pattern of operation pattern number 3 (Pattern 3). However, the LS2 axis of the second abutment mechanism 40 corresponds to "an LS axis where the present position is further to the front side than a target position of the frontmost LS axis" of Condition 2 in "Operation N'-(1)", and this corresponds to "an LS axis where interference newly occurs by moving the LS axis to an interference avoiding position" of Condition 3 in "Operation N'-(1)", in the following avoiding operation (3). Moreover, the operation sequence of the above described "Operation N" becomes "Operation 1".

As shown in Figure 15A, at the stage of an avoiding operation start, the LS axis (LS1 axis to LS3 axis) and the Y axis (YS1 axis to YS3 axis) of the first to third abutment mechanisms 30 to 50 are positioned at positions where the LS2 axis can become Condition 2 and Condition 3, while the guide beam 63 is positioned at an initial position sufficiently separated on the rear side in the L direction with respect to the position of the table 9 of the press brake and the L axis retreating position line 7 in contact with the danger region 6.

From this state, in avoiding operation (1), the L axis is moved to the vicinity of the L axis retreating position line 7 that becomes a retreating position by moving the guide beam 63 to the front side in the L direction, such as shown by the white arrow within the figure, and the Z axis is moved to a target position by moving in the Z direction. Along with this, the LS2 axis and the LS3 axis are respectively moved to the rear side in the L direction, such as shown by the white arrows within the figure, up to the interference avoiding position line 8, so that the tip ends of the abutment parts 42, 52 of the second and third abutment mechanisms 40, 50 are above the interference avoiding position line 8. This avoiding operation (1), for example, corresponds to the flow of steps of NO of S111, and YES of S112 to NO of S118.

Next, avoiding operation (2) is skipped since there is no operation axis corresponding to Case 1, and avoiding operation (3) is performed. As shown in Figure 15B, avoiding operation (3) moves the LS axis (LS1 axis) of the first abutment mechanism 30 to a target position (final arrival target position) by moving to the rear side in the L direction, such as shown by the white arrow within the figure, and moves the Y axis (YS3 axis) of the third abutment mechanism 50 to a target position (final arrival target position) by moving to the right side in the Y direction. Along with this, the Y axis (YS2 axis) of the second abutment mechanism 40 is moved to the right side in the Y direction, and the LS axis (LS2 axis) is moved to a target position (final arrival target position) by moving to the front side in the L direction, such as shown by the dotted line arrow within the figure.

In the illustrated example, the first and third abutment mechanisms 30, 50 are respectively moved to the rear side in the L direction and the right side in the Y direction, so that the tip ends of the abutment parts 32, 52 are above the interference avoiding position line 8, by movement to the rear side in the L direction of the LS1 axis and movement of the Y axis. Moreover, the second abutment mechanism 40 is moved to the front side in a right diagonal manner such as shown by the white arrow within the figure, by movement of the Y axis and movement of the LS2 axis to the front side in the L direction. In this way, the first to third abutment mechanisms 30 to 50 are moved diagonally and in the Y direction to a final target position, without interference by the abutment parts 32 to 52, the avoiding operation is finished, and the process moves to the operation of "L" that is the operation sequence of "Operation 2".

At the time of an avoiding operation end, the guide beam 63 is positioned further to the rear side in the L direction than the interference avoiding position line 8. Moreover, the LS1 axis and the LS3 axis of the first and third abutment mechanism 30, 50 are positioned at a final target position where the tip ends of the abutment parts 32, 52 are positioned above the interference avoiding position line 8. In addition, the LS2 axis of the second abutment mechanism 40 is positioned at a final target position where the tip end of the abutment part 42 is positioned above the L axis retreating position line 7. This avoiding operation (3), for example, corresponds to the flow of steps of YES of S125 to S128, and NO of S107.

Note that, in avoiding operation (1), the reason that the LS3 axis of the third abutment mechanism 50 is moved so that the tip end of the abutment part 52 of the third abutment mechanism 50 is above the interference avoiding position line 8 is as follows. Namely, as shown in Figure 15C, when looking at only the positional relationship of the operation axes in the initial position at the time of an avoiding operation start, since interference does not occur at the LS1 axis side and the LS2 axis side, it is not necessary to move the LS3 axis to the interference avoiding position line 8 side. However, in avoiding operation (1), the LS2 axis is moved to the interference avoiding position line 8 side so as to prevent an operation by becoming the LS axis of Condition 2, by an operation where the tip end of the abutment part 42 of the second abutment mechanism 40 is specified by the original operation sequence.

In this way, since an operation is started from a state where the LS2 axis is positioned further to the rear side in the L direction than the LS3 axis, in the case where the Y axis interval between the YS2 axis and the YS3 axis at the arrival target position becomes narrower than the shiftable Y axis interval limit, the LS2 axis corresponds to Condition 3 in avoiding operation (3), and interference also occurs at the LS2 axis side, namely, since it corresponds to the operation of Case 2, there is a fear of interference. In order to prevent this condition, the LS3 axis of the third abutment mechanism 50 is moved to the interference avoiding position line 8 side at the same time as the LS2 axis in avoiding operation (1). This operation corresponds to the avoiding operation referred to in the explanation of Condition 3.

In this way, in the operation control process of the back gauge device 20 relating to the embodiment, in the case where interference between the abutment mechanisms 30 to 50, which include abutment parts 32 to 52 of special shapes, occurs in the operation of at least one of the first and second abutment mechanisms 30, 40 and the operation of the third abutment mechanism 50, since an interference avoiding operation such as described above is performed, it becomes possible to operate the back gauge device 20 while effectively preventing interference between the abutment mechanisms 30 to 50.

### [Effect of the abutment mechanism operation control method relating to the embodiment]

As described above, according to the operation control method of the abutment mechanisms 30 to 50 relating to the embodiment, it is determined whether an operation of at least one of the first and second abutment mechanisms 30, 40 positioned at both sides in the Y direction and each having a shape with the abutment part 32, 42 arranged offset, and an operation of the third abutment mechanism 50 positioned between the first and second abutment mechanisms 30, 40, interfere with each other. Also, an interference avoiding operation for preventing interference is performed by at least one of the first, second, and third abutment mechanisms 30 to 50, based on a determination result. In this way, in the operations of the plurality of the abutment mechanisms 30 to 50, which include abutment parts 32 to 52 of special shapes, it becomes possible to surely prevent interference between the abutment mechanisms 30 to 50, and to safely operate the back gauge device 20.

### [Modified example]

Heretofore, while a preferable embodiment of the present invention has been described, the technical range of the present invention is not limited to the range described in the embodiment. It is possible to add various modifications or improvements to the above described embodiment.

For example, in the above described embodiment, in the flow of the operation control process shown in Figure 4 to Figure 6, while a state has been described where operations according to a plurality of operation sequences of operation patterns are determined in real time, and an interference avoiding operation is performed in the case of interference, the present invention is not limited to this. For example, in the back gauge control unit 14 of the NC device 10, a plurality of operation sequences of operation patterns may be analyzed beforehand based on notified operation pattern numbers, and an operation sequence (program) may be created that combines operation patterns in the case where an avoiding operation is necessary by performing a determination of interference. Also, if an operation of the back gauge device 20 is started, an operation control that contains an avoiding operation may be performed based on the created operation sequence.

Moreover, in the above described embodiment, while the third abutment mechanism 50 has been described with the abutment part 52 having a T shape arranged centered with respect to the reference axis P3 of the base part 51, the present invention is not limited to this. For example, the third abutment mechanism 50 may be configured by a combination of a plurality of base parts and abutment parts of an L shape. Even in such a configuration, for example, it becomes possible to include the third abutment mechanism 50 such that these abutment parts have a T shape when seen in an upper surface view, by having the long sides of the L portion of the abutment parts arranged adjacent to each other.

### Reference Symbol List

- 10: NC device
- 11: HMI application
- 12: operation pattern determination part
- 13: firmware
- 14: back gauge control unit
- 20: back gauge device
- 30: first abutment mechanism
- 31: base part
- 32: abutment part
- 40: second abutment mechanism
- 41: base part
- 42: abutment part
- 50: third abutment mechanism
- 51: base part
- 52: abutment part
- 61, 62: guide frame
- 63: guide beam

## Claims

1. An abutment mechanism operation control method, comprising:
determining, when, from among at least three abutment mechanisms (30, 40, 50) each including a base part (31, 41, 51) and an abutment part (32, 42, 52) provided on a tip end side of the base part (31, 41, 51), each configured to be movable along each of a first operation axis in a first direction and a second operation axis in a second direction intersecting the first direction, and each arranged in parallel in the second direction, first and second abutment mechanisms (30, 40) positioned at both sides in the second direction and each having a shape with the abutment part (32, 42) arranged offset with respect to a reference axis (P1, P2) of the base part (31, 41) along the first direction, and a third abutment mechanism (50) positioned between the first and second abutment mechanisms (30, 40), are operated by an operation control device (10) based on operation control information, whether an operation of at least one of the first and second abutment mechanisms (30, 40) and an operation of the third abutment mechanism (50) interfere with each other; and
causing at least one of the first, second, and third abutment mechanisms (30, 40, 50) to perform an avoiding operation to prevent the interference based on a determined determination result, wherein
the avoiding operation is an operation to move at least one of the first, second, and third abutment mechanisms (30, 40, 50) along the first operation axis and the second operation axis.

2. The abutment mechanism operation control method according to claim 1, further comprising, by the determining:
firstly determining, in operating of the first, second, and third abutment mechanisms (30, 40, 50) prescribed by a specific operation sequence from among a plurality of operation sequences decided by the operation control information, whether an operation where the first and second operation axes move at the same time or an operation where the first and second operation axes move at different times is contained in the operation of at least one of the first and second abutment mechanisms (30, 40) and the operation of the third abutment mechanism (50) as a possibility of the interference; and
secondly determining whether the interference occurs based on position information of an initial position and an operation target position of the first and second operation axes for each of the at least one of the first and second abutment mechanisms (30, 40) and the third abutment mechanism (50) in the operating in accordance with a firstly determined determination result.

3. The abutment mechanism operation control method according to claim 2, further comprising:
including position information of a table position of a press brake in the position information of the secondly determining.

4. The abutment mechanism operation control method according to any one of claims 1 to 3, further comprising:
firstly performing, in the avoiding, a first avoiding operation along the first operation axis, and thereafter performing a second avoiding operation along the second operation axis, for at least one of the first, second, and third abutment mechanisms (30, 40, 50).

5. The abutment mechanism operation control method according to claim 4, further comprising:
performing the second avoiding operation until an interval in the second direction between the reference axis (P1, P2) of the base part (31, 41) of the at least one of the first and second abutment mechanisms (30, 40) and the reference axis (P3) of the base part (51) of the third abutment mechanism (50) exceeds a predetermined interval.

6. The abutment mechanism operation control method according to claim 5, further comprising:
performing, in the avoiding, a third avoiding operation along the first and second operation axes at a time when the interval in the second direction exceeds the predetermined interval in the second avoiding operation.

7. An abutment mechanism operation control program for causing an operation control device (10) to execute:
a determination process configured to determine, when, from among at least three abutment mechanisms (30, 40, 50) each including a base part (31, 41, 51) and an abutment part (32, 42, 52) provided on a tip end side of the base part (31, 41, 51), each configured to be movable along each of a first operation axis in a first direction and a second operation axis in a second direction intersecting the first direction, and each arranged in parallel in the second direction, first and second abutment mechanisms (30, 40) positioned at both sides in the second direction and each having a shape with the abutment part (32, 42) arranged offset with respect to a reference axis (P1, P2) of the base part (31, 41) along the first direction, and a third abutment mechanism (50) positioned between the first and second abutment mechanisms (30, 40), are operated by an operation control device (10) based on operation control information, whether an operation of at least one of the first and second abutment mechanisms (30, 40) and an operation of the third abutment mechanism (50) interfere with each other; and
an avoiding operation process configured to cause at least one of the first, second, and third abutment mechanisms (30, 40, 50) to perform an avoiding operation to prevent the interference based on a determination result determined by the determination process, wherein
the avoiding operation is an operation to move at least one of the first, second, and third abutment mechanisms (30, 40, 50) along the first operation axis and the second operation axis.

8. The abutment mechanism operation control program according to claim 7, further comprising, by the determination process:
a first determination process configured to determine, in operating of the first, second, and third abutment mechanisms (30, 40, 50) prescribed by a specific operation sequence from among a plurality of operation sequences decided by the operation control information, whether an operation where the first and second operation axes move at the same time or an operation where the first and second operation axes move at different times is contained in the operation of at least one of the first and second abutment mechanisms (30, 40) and the operation of the third abutment mechanism (50) as a possibility of the interference; and
a second determination process configured to determine whether the interference occurs based on position information of an initial position and an operation target position of the first and second operation axes for each of the at least one of the first and second abutment mechanisms (30, 40) and the third abutment mechanism (50) in the operating in accordance with a determination result of the first determination process.

9. The abutment mechanism operation control program according to claim 8, further comprising:
including position information of a table position of a press brake in the position information of the second determination process.

10. The abutment mechanism operation control program according to any one of claims 7 to 9, further comprising:
firstly performing, in the avoiding operation process, a first avoiding operation process along the first operation axis, and thereafter performing a second avoiding operation process along the second operation axis, for at least one of the first, second, and third abutment mechanisms (30, 40, 50).

11. The abutment mechanism operation control program according to claim 10, further comprising:
performing the second avoiding operation process until an interval in the second direction between the reference axis (P1, P2) of the base part (31, 41) of the at least one of the first and second abutment mechanisms (30, 40) and the reference axis (P3) of the base part (51) of the third abutment mechanism (50) exceeds a predetermined interval.

12. The abutment mechanism operation control program according to claim 11, further comprising:
performing, in the avoiding operation process, a third avoiding operation process along the first and second operation axes at a time when the interval in the second direction exceeds the predetermined interval in the second avoiding operation process.

13. An abutment mechanism operation control device, comprising:
a control unit configured to control an operation of a back gauge device (20) including at least three abutment mechanisms (30, 40, 50) each including a base part (31, 41, 51) and an abutment part (32, 42, 52) provided on a tip end side of the base part (31, 41, 51), each configured to be movable along each of a first operation axis in a first direction and a second operation axis in a second direction intersecting the first direction, and each arranged in parallel in the second direction,
the control unit is configured to perform:
a determination process configured to determine, when, from among the abutment mechanisms (30, 40, 50) of the back gauge device (20), first and second abutment mechanisms (30, 40) positioned at both sides in the second direction and each having a shape with the abutment part (32, 42) arranged offset with respect to a reference axis (P1, P2) of the base part (31, 41) along the first direction, and a third abutment mechanism (50) positioned between the first and second abutment mechanisms (30, 40), are operated based on operation control information, whether an operation of at least one of the first and second abutment mechanisms (30, 40) and an operation of the third abutment mechanism (50) interfere with each other; and
an avoiding operation process configured to cause at least one of the first, second, and third abutment mechanisms (30, 40, 50) to perform an avoiding operation to prevent the interference based on a determination result determined by the determination process, wherein
the avoiding operation is an operation to move at least one of the first, second, and third abutment mechanisms (30, 40, 50) along the first operation axis and the second operation axis.

## Patentansprüche

1. Anlagemechanismus-Betriebssteuerverfahren, umfassend:
Ermitteln, wenn von mindestens drei Anlagemechanismen (30, 40, 50), die jeweils ein Basisteil (31, 41, 51) und ein Anlageteil (32, 42, 52) umfassen, das an einer Spitzenendseite des Basisteils vorgesehen ist (31, 41, 51), wobei jeder so ausgebildet ist, dass er entlang einer ersten Betriebsachse in einer ersten Richtung sowie entlang einer zweiten Betriebsachse in einer zweiten Richtung, die die erste Richtung schneidet, bewegbar ist, und wobei jeder parallel zur zweiten Richtung angeordnet ist, ein erster und ein zweiter Anlagemechanismus (30, 40), die auf beiden Seiten in der zweiten Richtung positioniert sind und jeweils eine Form aufweisen, bei der das Anlageteil (32, 42) entlang der ersten Richtung versetzt zu einer Referenzachse (P1, P2) des Basisteils (31, 41) angeordnet ist, sowie ein dritter Anlagemechanismus (50), der zwischen dem ersten und dem zweiten Anlagemechanismus (30, 40) angeordnet ist, von einer Betriebssteuervorrichtung (10) auf der Grundlage von Betriebssteuerungsinformationen betätigt werden, ob eine Betätigung mindestens eines der ersten und zweiten Anlagemechanismen (30, 40) und eine Betätigung des dritten Anlagemechanismus (50) sich gegenseitig stören; und
Bewirken, dass mindestens einer der ersten, zweiten und dritten Anlagemechanismen (30, 40, 50) einen Vermeidungsvorgang ausführt, um die Beeinträchtigung auf der Grundlage eines ermittelten Ermittlungsergebnisses zu verhindern, wobei
der Vermeidungsvorgang ein Vorgang ist, bei dem mindestens einer der ersten, zweiten und dritten Anlagemechanismen (30, 40, 50) entlang der ersten Betriebsachse und der zweiten Betriebsachse bewegt wird.

2. Das Anlagemechanismus-Betriebssteuerverfahren gemäß Anspruch 1, ferner umfassend, durch das Ermitteln:
zuerst Ermitteln, ob beim Betrieb des ersten, zweiten und dritten Anlagemechanismus (30, 40, 50), der durch eine bestimmte Betriebssequenz aus einer Vielzahl von durch die Betriebssteuerungsinformationen festgelegten Betriebssequenzen vorgegeben ist, im Betrieb mindestens eines der ersten und zweiten Anlagemechanismen (30, 40, 50) ein Vorgang enthalten ist, bei dem sich die erste und die zweite Betriebsachse gleichzeitig bewegen, oder ein Vorgang, bei dem sich die erste und die zweite Betriebsachse zu unterschiedlichen Zeitpunkten bewegen sowie im Betrieb des dritten Anschlagmechanismus (50) als mögliche Ursache für die Beeinträchtigung enthalten ist; und
zweitens Ermitteln, ob die Beeinträchtigung auftritt, basierend auf Positionsinformationen einer Ausgangsposition und einer Betriebszielposition der ersten und zweiten Betriebsachsen für jeden von dem mindestens einen der ersten und zweiten Anschlagmechanismen (30, 40) und dem dritten Anschlagmechanismus (50) während des Betriebs gemäß einem zuerst ermittelten Ermittlungsergebnis.

3. Das Anlagemechanismus-Betriebssteuerverfahren gemäß Anspruch 2, ferner umfassend:
Einbeziehen von Positionsinformationen einer Tischposition einer Abkantpresse in die Positionsinformationen der zweiten Ermittlung.

4. Das Anlagemechanismus-Betriebssteuerverfahren gemäß einem der Ansprüche 1 bis 3, ferner umfassend:
zuerst, während des Vermeidens, einen ersten Vermeidungsvorgang entlang der ersten Betriebsachse und anschließend einen zweiten Vermeidungsvorgang entlang der zweiten Betriebsachse für mindestens einen der ersten, zweiten und dritten Anlagemechanismen (30, 40, 50) durchführen.

5. Das Anlagemechanismus-Betriebssteuerverfahren gemäß Anspruch 4, ferner umfassend:
die Durchführung des zweiten Vermeidungsvorgangs, bis ein Abstand in der zweiten Richtung zwischen der Referenzachse (P1, P2) des Basisteils (31, 41) des mindestens einen von dem ersten und dem zweiten Anlagemechanismus (30, 40) und der Referenzachse (P3) des Basisteils (51) des dritten Anlagemechanismus (50) einen vorgegebenen Abstand überschreitet.

6. Das Anlagemechanismus-Betriebssteuerverfahren gemäß Anspruch 5, ferner umfassend:
die Durchführung, beim Vermeiden, eines dritten Vermeidungsvorgangs entlang der ersten und zweiten Betriebsachsen zu einem Zeitpunkt, zu dem der Abstand in der zweiten Richtung den vorgegebenen Abstand im zweiten Vermeidungsvorgang überschreitet.

7. Anlagemechanismus-Betriebssteuerprogramm zum Bewirken, dass eine Betriebssteuervorrichtung (10) ausführt:
einen Ermittlungsvorgang, der konfiguriert ist, um zu ermitteln, wenn von mindestens drei Anlagemechanismen (30, 40, 50), die jeweils ein Basisteil (31, 41, 51) und ein Anlageteil (32, 42, 52) umfassen, das an einer Spitzenendseite des Basisteils vorgesehen ist (31, 41, 51), wobei jeder so ausgebildet ist, dass er entlang einer ersten Betriebsachse in einer ersten Richtung sowie entlang einer zweiten Betriebsachse in einer zweiten Richtung, die die erste Richtung schneidet, bewegbar ist, und wobei jeder parallel zur zweiten Richtung angeordnet ist, ein erster und ein zweiter Anlagemechanismus (30, 40), die auf beiden Seiten in der zweiten Richtung positioniert sind und jeweils eine Form aufweisen, bei der das Anlageteil (32, 42) entlang der ersten Richtung versetzt zu einer Referenzachse (P1, P2) des Basisteils (31, 41) angeordnet ist, sowie ein dritter Anlagemechanismus (50), der zwischen dem ersten und dem zweiten Anlagemechanismus (30, 40) angeordnet ist, von einer Betriebssteuervorrichtung (10) auf der Grundlage von Betriebssteuerungsinformationen betätigt werden, ob eine Betätigung mindestens eines der ersten und zweiten Anlagemechanismen (30, 40) und eine Betätigung des dritten Anlagemechanismus (50) sich gegenseitig stören; und
einen Vermeidungsvorgangsprozess, der konfiguriert ist, um zu bewirken, dass mindestens einer der ersten, zweiten und dritten Anlagemechanismen (30, 40, 50) einen Vermeidungsvorgang ausführt, um die Beeinträchtigung auf der Grundlage eines von dem Ermittlungsvorgang ermittelten Ermittlungsergebnisses zu verhindern, wobei
der Vermeidungsvorgang ein Vorgang ist, bei dem mindestens einer der ersten, zweiten und dritten Anlagemechanismen (30, 40, 50) entlang der ersten Betriebsachse und der zweiten Betriebsachse bewegt wird.

8. Das Anlagemechanismus-Betriebssteuerprogramm gemäß Anspruch 7, ferner umfassend, durch den Ermittelungsvorgang:
einen ersten Ermittelungsvorgang, der konfiguriert ist, um beim Betrieb des ersten, zweiten und dritten Anlagemechanismus (30, 40, 50) , der durch eine bestimmte Betriebssequenz aus einer Vielzahl von durch die Betriebssteuerungsinformationen festgelegten Betriebssequenzen vorgegeben ist, zu ermitteln, ob ein Betrieb, bei dem sich die erste und die zweite Betriebsachse gleichzeitig bewegen, oder ein Betrieb, bei dem sich die erste und die zweite Betriebsachse zu unterschiedlichen Zeitpunkten bewegen, im Betrieb mindestens eines der ersten und zweiten Anlagemechanismen (30, 40) sowie im Betrieb des dritten Anlagemechanismus (50) als mögliche Beeinträchtgung enthalten ist; und
einen zweiten Ermittelungsvorgang, der konfiguriert ist, um auf der Grundlage von Positionsinformationen einer Ausgangsposition und einer Betriebszielposition der ersten und zweiten Betriebsachsen für jeden von dem mindestens einen von dem ersten und dem zweiten Anlagemechanismus (30, 40) sowie dem dritten Anlagemechanismus (50) während des Betriebs entsprechend einem Ermittlungsergebnis des ersten Ermittelungsvorgangs zu ermitteln, ob die Beeinträchtigung auftritt.

9. Das Programm zur Steuerung des Betriebs von Anschlagmechanismen gemäß Anspruch 8, ferner umfassend:
das Einbeziehen von Positionsinformationen einer Tischposition einer Abkantpresse in die Positionsinformationen des zweiten Ermittelungsvorgangs.

10. Das Steuerprogramm für den Betrieb des Anschlagmechanismus gemäß einem der Ansprüche 7 bis 9, ferner umfassend:
zunächst die Durchführung, im Vermeidungsvorgangsprozess, eines ersten Vermeidungsvorgangsprozesses entlang der ersten Betriebsachse und anschließend die Durchführung eines zweiten Vermeidungsvorgangsprozesses entlang der zweiten Betriebsachse für mindestens einen von dem ersten, dem zweiten und dem dritten Anlagemechanismus (30, 40, 50).

11. Das Steuerprogramm für den Betrieb von Anlagemechanismen gemäß Anspruch 10, ferner umfassend:
die Durchführung des zweiten Vermeidungsvorgangsprozesses, bis ein Abstand in der zweiten Richtung zwischen der Referenzachse (P1, P2) des Basisteils (31, 41) des mindestens einen von dem ersten und dem zweiten Anlagemechanismus (30, 40) und der Referenzachse (P3) des Basisteils (51) des dritten Anlagemechanismus (50) einen vorgegebenen Abstand überschreitet.

12. Das Programm zur Steuerung des Betriebs von Anlagemechanismen gemäß Anspruch 11, ferner umfassend:
die Durchführung, im Vermeidungsvorgangsprozess, eines dritten Vermeidungsvorgangsprozesses entlang der ersten und zweiten Betriebsachsen zu einem Zeitpunkt, zu dem der Abstand in der zweiten Richtung den vorgegebenen Abstand im zweiten Vermeidungsvorgangsprozess überschreitet.

13. Anlagemechanismus-Betriebssteuerungsvorrichtung, umfassend:
eine Steuereinheit, die konfiguriert ist, um einen Betrieb einer Hinteranschlagvorrichtung (20) zu steuern, die mindestens drei Anlagemechanismen (30, 40, 50) umfasst, von denen jeder ein Basisteil (31, 41, 51) und ein Anlageteil (32, 42, 52) aufweist, das an einer Spitzenendseite des Basisteils (31, 41, 51) vorgesehen ist, wobei jeder so ausgebildet ist, dass er entlang einer ersten Betriebsachse in einer ersten Richtung sowie entlang einer zweiten Betriebsachse in einer zweiten Richtung, die die erste Richtung schneidet, bewegbar ist, und wobei diese jeweils parallel in der zweiten Richtung angeordnet sind,
wobei die Steuereinheit dazu ausgelegt ist, Folgendes durchzuführen:
einen Ermittlungsprozess, der dazu ausgelegt ist, zu ermitteln, wenn aus den Anlagemechanismen (30, 40, 50) der Hinteranschlagvorrichtung (20) ein erster und ein zweiter Anlagemechanismus (30, 40), die an beiden Seiten in der zweiten Richtung positioniert sind und jeweils eine Form aufweisen, bei der der Anlageteil (32, 42) versetzt zu einer Referenzachse (P1, P2) des Basisteils (31, 41) entlang der ersten Richtung angeordnet ist, sowie ein dritter Anlagemechanismus (50), der zwischen dem ersten und dem zweiten Anlagemechanismus (30, 40) positioniert ist, auf der Grundlage von Betriebssteuerungsinformationen betätigt werden, ob eine Betätigung mindestens eines von dem ersten und dem zweiten Anlagemechanismus (30, 40) und eine Betätigung des dritten Anlagemechanismus (50) sich gegenseitig beeinträchtigen; und
ein Vermeidungsvorgangsprozess, der konfiguriert ist, um mindestens einen von dem ersten, dem zweiten und dem dritten Anlagemechanismus (30, 40, 50) dazu zu veranlassen, einen Vermeidungsvorgang auszuführen, um die Beeinträchtigung auf der Grundlage eines durch den Ermittlungsprozess ermittelten Ergebnisses zu verhindern, wobei
der Ausweichvorgang ein Vorgang ist, bei dem mindestens einer von dem ersten, dem zweiten und dem dritten Anlagemechanismus (30, 40, 50) entlang der ersten Betriebsachse und der zweiten Betriebsachse bewegt wird.

## Revendications

1. Procédé de commande de fonctionnement de mécanismes de butée, comprenant
le fait de déterminer à quel moment, parmi au moins trois mécanismes de butée (30, 40, 50) comportant chacun une partie de base (31, 41, 51) et une partie de butée (32, 42, 52) ménagée sur un côté d'extrémité de la partie de base (31, 41, 51), chacun étant conçu pour pouvoir être déplacé le long de chacun parmi un premier axe de fonctionnement dans une première direction et un second axe de fonctionnement dans une seconde direction sécante de la première direction, et disposé chacun parallèlement dans la seconde direction, des premier et deuxième mécanismes de butée (30,40) étant positionnés des deux côtés dans la seconde direction et ayant chacun une forme dans laquelle la partie de butée (32, 42) est disposée de manière décalée par rapport à un axe de référence (P1, P2) de la partie de base (31, 41) le long de la première direction, et un troisième mécanisme de butée (50) étant positionné entre les premier et deuxième mécanismes de butée (30, 40), lesdits mécanismes sont faits fonctionner par un dispositif de commande de fonctionnement (10) sur la base d'informations de commande de fonctionnement, si un fonctionnement de l'un au moins parmi les premier et deuxième mécanismes de butée (30, 40) et un fonctionnement du troisième mécanisme de butée (50) interfèrent l'un avec l'autre ; et
le fait d'amener l'un au moins parmi les premier, deuxième et troisième mécanismes de butée (30, 40, 50) à effectuer un fonctionnement d'évitement afin d'empêcher l'interférence sur la base d'un résultat de détermination déterminé, dans lequel
le fonctionnement d'évitement est un fonctionnant visant à déplacer au moins l'un parmi les premier, deuxième et troisième mécanismes de butée (30, 40, 50) le long du premier axe de fonctionnement et du second axe de fonctionnement.

2. Procédé de commande de fonctionnement de mécanismes de butée selon la revendication 1, comprenant en outre, dans le fait de déterminer :
le fait de déterminer, en premier lieu, lors du fonctionnement des premier, deuxième et troisième mécanismes de butée (30, 40, 50) prescrit par une séquence de fonctionnement spécifique parmi une pluralité de séquences de fonctionnement décidée par les informations de commande de fonctionnement, si un fonctionnement dans lequel les premier et second axes de fonctionnement se déplacent simultanément ou un fonctionnement dans lequel les premier et second axes de fonctionnement se déplacent à des moments différents est contenu dans le fonctionnement de l'un au moins parmi les premier et deuxième mécanismes de butée (30, 40) et le fonctionnement du troisième mécanisme de butée (50) comme constituant une possibilité d'interférence ; et
le fait de déterminer, en second lieu, si l'interférence se produit sur la base d'informations de position d'une position initiale et d'une position cible de fonctionnement des premier et second axes de fonctionnement pour chacun de l'un au moins parmi les premier et deuxième mécanismes de butée (30, 40) et du troisième mécanisme de butée (50) pendant le fonctionnement conformément à un premier résultat de détermination déterminé.

3. Procédé de commande de fonctionnement de mécanismes de butée selon la revendication 2, comprenant en outre :
l'intégration d'informations de position relatives à une position de la table d'une presse-plieuse dans les informations de position lors de la seconde détermination.

4. Procédé de commande de fonctionnement de mécanismes de butée selon l'une quelconque des revendications 1 à 3, comprenant en outre :
le fait d'effectuer, en premier lieu, lors de l'évitement, un premier fonctionnement d'évitement le long du premier axe de fonctionnement, puis d'effectuer ensuite un deuxième fonctionnement d'évitement le long du second axe de fonctionnement, pour l'un au moins parmi les premier, second et troisième mécanismes de butée (30, 40, 50).

5. Procédé de commande de fonctionnement de mécanismes de butée selon la revendication 4, comprenant en outre :
le fait d'effectuer le deuxième fonctionnement d'évitement jusqu'à ce qu'un intervalle dans la seconde direction entre l'axe de référence (P1, P2) de la partie de base (31, 41) de l'au moins un parmi les premier et deuxième mécanismes de butée (30, 40) et l'axe de référence (P3) de la partie de base (51) du troisième mécanisme de butée (50) dépasse un intervalle prédéterminé.

6. Procédé de commande de fonctionnement de mécanismes de butée selon la revendication 5, comprenant en outre :
le fait d'effectuer, lors de l'évitement, un troisième fonctionnement d'évitement le long des premier et second axes de fonctionnement lorsque l'intervalle dans la seconde direction dépasse l'intervalle prédéterminé dans le deuxième fonctionnement d'évitement.

7. Programme de commande de fonctionnement de mécanismes de butée destiné à amener un dispositif de commande de fonctionnement (10) à exécuter :
un processus de détermination configuré pour déterminer à quel moment, parmi au moins trois mécanismes de butée (30, 40, 50) comportant chacun une partie de base (31, 41, 51) et une partie de butée (32, 42, 52) ménagée sur un côté d'extrémité de la partie de base (31, 41, 51), chacun étant conçu pour pouvoir être déplacé le long de chacun parmi un premier axe de fonctionnement dans une première direction et un second axe de fonctionnement dans une seconde direction sécante de la première direction, et disposé chacun parallèlement dans la seconde direction, les premier et deuxième mécanismes de butée (30, 40) étant positionnés des deux côtés dans la seconde direction et ayant chacun une forme dans laquelle la partie de butée (32, 42) est disposée de manière décalée par rapport à un axe de référence (P1, P2) de la partie de base (31, 41) le long de la première direction, et un troisième mécanisme de butée (50) étant positionné entre les premier et deuxième mécanismes de butée (30, 40), lesdits mécanismes sont faits fonctionner par un dispositif de commande de fonctionnement (10) sur la base d'informations de commande de fonctionnement, si un fonctionnement de l'un au moins parmi les premier et deuxième mécanismes de butée (30, 40) et un fonctionnement du troisième mécanisme de butée (50) interfèrent l'un avec l'autre ; et
un processus de fonctionnement d'évitement configuré pour amener l'un au moins parmi les premier, deuxième et troisième mécanismes de butée (30, 40, 50) à effectuer un fonctionnement d'évitement afin d'empêcher l'interférence sur la base d'un résultat de détermination déterminé par le processus de détermination, dans lequel
le fonctionnement d'évitement est un fonctionnement visant à déplacer au moins l'un parmi les premier, deuxième et troisième mécanismes de butée (30, 40, 50) le long du premier axe de fonctionnement et du second axe de fonctionnement.

8. Programme de commande de fonctionnement de mécanismes de butée selon la revendication 7, comprenant en outre, par le processus de détermination :
un premier processus de détermination configuré pour déterminer, lors du fonctionnement des premier, deuxième et troisième mécanismes de butée (30, 40, 50) prescrit par une séquence de fonctionnement spécifique parmi une pluralité de séquences de fonctionnement décidée par les informations de commande de fonctionnement, si un fonctionnement dans lequel les premier et second axes de fonctionnement se déplacent simultanément ou un fonctionnement dans lequel les premier et second axes de fonctionnement se déplacent à des moments différents est contenu dans le fonctionnement de l'un au moins parmi les premier et deuxième mécanismes de butée (30, 40) et le fonctionnement du troisième mécanisme de butée (50) comme constituant une possibilité d'interférence ; et
un second processus de détermination configuré pour déterminer si l'interférence se produit sur la base des informations de position d'une position initiale et d'une position cible de fonctionnement des premier et second axes de fonctionnement pour chacun de l'un au moins parmi les premier et deuxième mécanismes de butée (30, 40) et le troisième mécanisme de butée (50) pendant le fonctionnement conformément à un résultat de détermination du premier processus de détermination.

9. Programme de commande de fonctionnement de mécanismes de butée selon la revendication 8, comprenant en outre :
l'intégration d'informations de position relatives à une position de la table d'une presse-plieuse dans les informations de position du second processus de détermination.

10. Programme de commande de fonctionnement de mécanismes de butée selon l'une quelconque des revendications 7 à 9, comprenant en outre :
le fait d'effectuer, en premier lieu, lors du processus de fonctionnement d'évitement, un premier processus de fonctionnement d'évitement le long du premier axe de fonctionnement, puis d'effectuer ensuite un deuxième processus de fonctionnement d'évitement le long du second axe de fonctionnement, pour l'un au moins parmi les premier, second et troisième mécanismes de butée (30, 40, 50).

11. Programme de commande de fonctionnement de mécanismes de butée selon la revendication 10, comprenant en outre :
le fait d'effectuer le deuxième processus de fonctionnement d'évitement jusqu'à ce qu'un intervalle dans la seconde direction entre l'axe de référence (P1, P2) de la partie de base (31, 41) de l'au moins un parmi les premier et deuxième mécanismes de butée (30, 40) et l'axe de référence (P3) de la partie de base (51) du troisième mécanisme de butée (50) dépasse un intervalle prédéterminé

12. Programme de commande de fonctionnement de mécanismes de butée selon la revendication 11, comprenant en outre :
le fait d'effectuer, lors du processus de fonctionnement d'évitement, un troisième processus de fonctionnement d'évitement le long des premier et second axes de fonctionnement lorsque l'intervalle dans la seconde direction dépasse l'intervalle prédéterminé dans le second processus de fonctionnement d'évitement.

13. Dispositif de commande de fonctionnement de mécanismes de butée, comprenant :
un module de commande configuré pour commander le fonctionnement d'un dispositif de limite arrière (20) comprenant au moins trois mécanismes de butée (30, 40, 50) comportant chacun une partie de base (31, 41, 51) et une partie de butée (32, 42, 52) ménagée sur un côté d'extrémité de la partie de base (31, 41, 51), chacun étant conçu pour pouvoir être déplacé le long de chacun parmi un premier axe de fonctionnement dans une première direction et un second axe de fonctionnement dans une seconde direction sécante de la première direction, et disposé chacun parallèlement dans la seconde direction,
le module de commande étant configuré pour effectuer :
un processus de détermination configuré pour déterminer à quel moment, parmi au moins les trois mécanismes de butée (30, 40, 50) du dispositif de limite arrière (20), les premier et deuxième mécanismes de butée (30, 40) étant positionnés des deux côtés dans la seconde direction et ayant chacun une forme dans laquelle la partie de butée (32, 42) est disposée de manière décalée par rapport à un axe de référence (P1, P2) de la partie de base (31, 41) le long de la première direction, et un troisième mécanisme de butée (50) étant positionné entre les premier et deuxième mécanismes de butée (30, 40), lesdits mécanismes sont faits fonctionner sur la base d'informations de commande de fonctionnement, si un fonctionnement de l'un au moins parmi les premier et deuxième mécanismes de butée (30, 40) et un fonctionnement du troisième mécanisme de butée (50) interfèrent l'un avec l'autre ; et
un processus de fonctionnement d'évitement configuré pour amener l'un au moins parmi les premier, deuxième et troisième mécanismes de butée (30, 40, 50) à effectuer une opération d'évitement afin d'empêcher l'interférence sur la base d'un résultat de détermination déterminé par le processus de détermination, dans lequel
le fonctionnement d'évitement est un fonctionnement visant à déplacer au moins l'un parmi les premier, deuxième et troisième mécanismes de butée (30, 40, 50) le long du premier axe de fonctionnement et du second axe de fonctionnement.
